# EUROPEAN PATENT SPECIFICATION

(11) **EP 4 297 300 B1**
(45) Date of publication and mention of the grant of the patent: **02.12.2026**
(21) Application number: 23180562.3
(22) Date of filing: 21.06.2023
(51) Int. Cl.: H04B 17/309, G01S 7/40, H01Q 1/42, G01S 13/931, H01Q 1/32, H01Q 19/06

(54) **MEASURING DEVICE, SYSTEM AND METHOD FOR MEASURING A DEVICE UNDER TEST**
MESSVORRICHTUNG, SYSTEM UND VERFAHREN ZUR MESSUNG EINER ZU TESTENDEN VORRICHTUNG
DISPOSITIF DE MESURE, SYSTÈME ET PROCÉDÉ DE MESURE D'UN DISPOSITIF À L'ESSAI

(30) Priority: 21.06.2022 EP 22180239
(43) Date of publication of application: 27.12.2023
(73) Proprietor: Perisens GmbH, 85622 Feldkirchen (DE)
(72) Inventor: Callies, Lucas Tobias, 81829 Munich (DE); Pfeiffer, Florian, 81825 München (DE); Vierheller, Marius, 85622 Feldkirchen (DE)
(74) Representative: Stellbrink & Partner Patentanwälte mbB

(56) References cited:
- WO-A1-2022/063794

## Description

### Field

The present invention generally relates to a measuring device, system and method for measuring a device under test, such as, radomes for automotive radars. More particularly, the present invention relates to determining at least one property of a target area of the device under test by utilizing multiple measurements at different relative positions between the target area and the measuring device.

### Introduction

Radars are detection systems or sensors that use electromagnetic waves to determine range, angle or velocity of objects. A radar usually comprises a transmitting unit, or antenna, that radiates electromagnetic waves. The frequency of the emitted electromagnetic wave, or the operational frequency of the radar, can be within a wide range of the electromagnetic spectrum, usually within the radio and microwave part of the spectrum and typically depends on the use scenario of the radar. The lower the operational frequency of the radar the higher the detection range, as the transmitted electromagnetic waves are less attenuated or affected by external factors, e.g., by weather conditions, radar covers, etc. On the other hand, high frequencies can offer a better accuracy and resolution of detection due to the smaller wavelength, but at the same time are highly susceptible to attenuation.

An emerging technology is the use of radar systems in automotive industry. More particularly, radars operating in high frequencies, such as, 20 to 160 GHz, usually between 70 and 90 GHz, can provide a very high range resolution and achievable accuracy. This feature makes such radars preferable for use in parking assistants, blind spot monitoring, brake assistant systems, etc. However, due to the very high operating frequency, such radar systems can suffer from high signal attenuation.

A radar is usually set to operate in open-air conditions. Thus, the radar is exposed to different weather conditions, dust or other external particles and forces that may damage the radar and/or lower the accuracy of its measurements. In cars the radars are wanted to be covered for aesthetic reasons so that they are not visible. To alleviate the above, a radome, also referred as a radar dome or radar cover, is implemented around the radar, hence, protecting it against external factors and/or reducing its salience. Typically, the bumper or the emblem of a vehicle is used as a radome to cover and hide the radar.

While hiding the radar (e.g., behind a bumper or emblem of car) can offer protection to the radar and can decrease its salience, it can also affect the operation of the radar. Due to dielectric characteristics of the radome material, the radome may cause unwanted reflections, attenuation, beam deflection, beam broadening, sidelobe increase, etc. These side effects may introduce errors in the radar sensing. The unwanted effects caused by the radome, particularly attenuation and reflection, can become significant when the radar operates in high frequencies. For example, the radars operating in high frequencies, usually used in automotive industry are highly susceptible to suffer from attenuation and other unwanted effects caused by the radome.

Thus, in one hand it is advantageous for various reasons (e.g., protection against weather conditions or external elements or forces and/or improving vehicle design) to cover the radar sensor with a radome. On the other hand, the radome can introduce unwanted effects (e.g., signal attenuation and reflections) that may increase the inaccuracy or decrease the detection or sensing capability of the radar.

Furthermore, the use of radar systems in vehicles, such as for parking assistance, blind spot monitoring, braking assistance, etc., are prone to strict requirements set by legal standards, such that maximum safety can be ensured for traffic participants. These standards or regulations usually require high detection accuracy.

Some attempts have been made trying to alleviate the shortcomings of using a radome.

For example, US 5,371,505 A relates to a method for determining signal transmission characteristics for a selected area of a radome.

US 3,936,736 A relates to a hand-held universal radome tester which is an instrument for locating discontinuities and impurities inside a radome wall and for determining the quality of an anti-static paint coating over the exterior surface of a radome.

EP 3,258,288 A1 relates to a method and system for testing the transmission and reflection properties of a radome.

US 5,066,921 A relates to a system for testing radomes to detect defects and evaluate the radome effect on antenna patterns.

WO 2022/063794 A1 relates to measurement of reflective/transmissive parameter of an automotive radar radome, by implementing a movement system of the radome or the transmitting/receiving antennas.

### Summary

The present invention seeks to overcome or at least alleviate the shortcomings and disadvantages of the prior art.

These objects are met by the device, system and the method of the present invention.

In a first aspect, the present invention relates to a method of measuring a target area of a device under test, as defined by claim 1. The method comprises providing a measuring device comprising a transmitter configured to emit electromagnetic waves along an antenna axis and a receiver configured to receive electromagnetic waves emitted by the transmitter.

The method further comprises arranging the measuring device and/or the device under test such that the antenna axis intersects the target area. This way, signals emitted by the transmitter can become incident on the target area.

The method further comprises generating a relative motion between the measuring device and the target area. This can allow a relative positioning between the measuring device and the target area to be changed. In particular, generating a relative motion can be advantageous as it can allow for a distance between the target area and the transmitter and/or for a distance between the target area and the receiver to be changed.

The method further comprises the measuring device performing a plurality of measurements during the relative motion to thereby obtain a measured data set.

In a second aspect, the present invention relates to a measuring device for measuring a target area of a device under test, as defined by claim 12. The measuring device comprises a transmitter configured to emit electromagnetic waves along an antenna axis and a receiver configured to receive electromagnetic waves emitted by the transmitter. The measuring device is configured to allow arranging the measuring device and/or the device under test such that the antenna axis intersects the target area. Moreover, the measuring device is configured to perform a plurality of measurements during a relative motion the measuring system and the target area to thereby obtain a measured data set.

In a third aspect, the present invention relates to a measuring system for measuring a target area of a device under test, as defined by claim 14. The measuring system comprises the measuring device and a processing system configured to determine based on the measured data set at least one property of the target area.

The measuring system can further comprise a positioning system.

The positioning system can be configured to arrange the measuring device and/or the device under test such that the antenna axis intersects the target area.

The positioning system can be configured to generate a relative motion between the measuring device and the target area.

The measuring system can be configured to carry out the method according to first aspect of the present invention.

In a fourth aspect, which is not individually claimed but disclosed herein to better understand the invention, the present disclosure relates to a processing device configured to receive a measured data set and based thereon determine at least one property. The measured data set can be generated via the method according to first aspect of the present invention. Each of the at least one property determined by the processing device can be a property of a target area of a device under test.

In a further aspect, which is not individually claimed but disclosed herein to better understand the invention, the present disclosure relates to a use of the method to determine at least one property of a target area of a device under test.

In a further aspect, which is not individually claimed but disclosed herein to better understand the invention, the present disclosure relates to a use of the measuring device to determine at least one property of a target area of a device under test.

In a further aspect, which is not individually claimed but disclosed herein to better understand the invention, the present disclosure relates to a use of the processing system to determine at least one property of a target area of a device under test.

In a further aspect, which is not individually claimed but disclosed herein to better understand the invention, the present disclosure relates to a use of the measuring system to determine at least one property of a target area of a device under test.

Throughout the specification the term "step" can also refer to an "act" or "process" of the method. That is, the terms "step", "act" and "process" can be used interchangeably.

The present invention, thus, performs a plurality of measurements during the relative motion to thereby obtain a measured data set. That is, the plurality of measurements is performed while the relative motion is ongoing. This may include embodiments wherein the relative motion is performed in a stop-go manner, i.e., after each motion, a pause is made and a measurement performed after each said steps repeat. However, preferably the relative motion can be continuous and the plurality of measurements can be performed during said continuous relative motion.

By performing the plurality of measurements during the relative motion to thereby obtain a measured data set can have the advantage of allowing the measured data set to be indicative of: (i) effects caused by the fixed transmission path between the transmitter and receiver followed by the transmitted part of the electromagnetic signal and (ii) effects caused by the varying reflection paths followed by the reflected part(s) of the electromagnetic signal. In addition to that, said effects can be captured in the measured data set such that they are separable from each other. Therefore, the measured data set can allow determining the effects caused by the fixed transmission path and effects caused by the varying reflection paths. The former can be indicative of a transmission property of the target area, while the latter can be indicative of the reflection property of the target area.

Thus, by performing the plurality of measurements during the relative motion to thereby obtain a measured data set can have the advantage of allowing for a transmission and reflection property of the target area to be determined. Moreover, being able to separate the above two effects from each-other may also yield more accurate determination of the transmission property and of the reflection property of the target area.

The present invention can further be advantageous in that by performing a plurality of measurements during the relative motion between the measuring device and the target area restrictions on the hardware setup requirements can be significantly reduced. In particular, it may not be necessary to position the device under test and/or the measuring device such that the target area of the device under test is at a particular predefined position. Put differently, for the present invention it may not be a necessity to perform a measurement while the target area is positioned at a particular and/or predefined distance from the transmitter and/or at a particular and/or predefined distance from the receiver. In contrast, the present invention can allow performing the measurements while the target area is positioned at an arbitrary distance from the transmitter and/or at an arbitrary distance from the receiver.

Therefore, as it is not required to position the device under test and/or the measuring device such that the target area of the device under test is at a particular, exact and predefined position restrictions on the hardware requirements, particularly on a positioning system moving the device under test and/or the measuring device, can be significantly reduced.

In fact, the present invention may also utilize vibrations of the device under test and/or of the measuring device. Therefore, the present invention may also alleviate the requirement of moving the device under test and/or the measuring device for the specific purpose of generating the relative motion. The present invention can, for example, utilize vibrations of the device under test and/or of the measuring device caused by a prior motion of the device under test and/or of the measuring device. As a result, restrictions on the hardware requirements can be further reduced. Additionally, the time for measuring a target area of the device under test can be reduced, because the need to move the device under test and/or of the measuring device for the specific purpose of generating the relative motion can be reduced and/or a prior motion can be utilized (e.g., the motion for arranging the measuring device and/or the device under test such that the antenna axis intersects the target area).

Further advantages of the present invention which can become more apparent in particular embodiments thereof, comprise: the ability to assess the accuracy of the measurement of the target area; the ability to determine whether the measuring device and/or the device under test are moving relative to each other; the ability to determine material properties of the device under test (e.g., stiffness).

Arranging the measuring device and/or the device under test such that the antenna axis intersects the target area is interchangeably referred to as step S2, step (S2) or simply S2 for the sake of brevity.

Step S2 can comprises arranging the measuring device and/or the device under test such that the target area can be positioned between the transmitter and the receiver. Step S2 can comprise arranging the measuring device and/or the device under test such that a first side of the target area faces the transmitter and a second side of the target area faces the receiver. Thus, electromagnetic waves transmitted by the transmitter can pass through the target area before being received by the receiver. This can be particularly advantageous for determining a transmission property of the target area (in addition or in alternative to determining a reflection property of the target area).

Step S2 can comprises arranging the measuring device and/or the device under test such that the target area is closer to the transmitter than to the receiver or such that the target area is closer to the receiver than to the transmitter.

For example, step S2 can comprises arranging the measuring device and/or the device under test such that a distance between the target area and the transmitter or the receiver, whichever is closest, can at most 45%, preferably at most 25% of the distance between the transmitter and receiver.

For example, step S2 can comprises arranging the measuring device and/or the device under test such that a distance between the target area and the transmitter or the receiver, whichever is closest, can be at least 10% and at most 45%, preferably at least 20% and at most 25% of the distance between the transmitter and receiver.

That is, in some embodiments, in step S2 the measuring device and/or the device under test can be arranged in such that the target area is not in the middle between the transmitter and the receiver. This can have several advantages. First, the likelihood that reflections are received at the receiver (and not directed away from the receiver) can be increased. Secondly, it can allow for a more accurate determination of a reflection property of a particular side of the target area. In particular, arranging the measuring device and/or the device under test such that the target area is closer to the transmitter than to the receiver can favour determining the reflection property of the side of the target area facing the transmitter. Similarly, arranging the measuring device and/or the device under test such that the target area is closer to the receiver than to the transmitter can favour determining the reflection property of the side of the target area facing the receiver. Thus, depending on which side of the target area needs to be measured, for a more efficient measurement the measuring device and/or the device under test can be arranged accordingly as discussed.

Step S2 can comprises arranging the measuring device and/or the device under test such that an angle between the antenna axis and a perpendicular line with a surface of the target area is at most 10°, preferably at most 5°, even more preferably at most 2°. Ideally, it can be advantageous that the antenna axis is perpendicular with a surface of the target area. This way the likelihood that reflections are received at the receiver (and not directed away from the receiver) can be increased.

Said surface of the target area can for example be the first side or the second side of the target area.

Step S2 can comprise arranging the measuring device and/or the device under test such that a normal axis spanned by the target area can be parallel to the antenna axis.

Step S2 can comprise arranging the measuring device and/or the device under test such that a normal vector of the first side of the of the target area points towards the transmitter. That is, the first side of the target area can face the transmitter and the first side can be perpendicular with the antenna axis.

Step S2 can comprise arranging the measuring device and/or the device under test such that the target area can be at an arbitrary position along the antenna axis.

Step S2 can comprise arranging the measuring device and/or the device under test such that the target area comprises an arbitrary distance from the transmitter and/or from the receiver.

That is, the present invention alleviates the need of having to position the target area at a particular and/or predefined position along the antenna axis. At most, the present invention may require a rough positioning requirement, e.g., closer to the receiver, or closer to the transmitter. But even in such cases providing the target area at a specific, exact location may not be required.

In some embodiments, step S2 can be based on information indicating the position of the target area within the device under test. Said information can, for example, be utilized to increase the likelihood that the antenna axis intersects the target.

Step S2 can comprise moving the measuring device towards the target area.

Step S2 can comprise moving the target area towards the measuring device.

Step S2 can comprise moving the measuring device towards the target area and/or moving the target area towards the measuring device.

Step S2 can be performed by a positioning system. The positioning system can comprise a motorized device configured to generate motion. For example, the positioning system can comprise a robotic arm.

Generating a relative motion between the measuring device and the target area is interchangeably referred to as step S3, step (S3) or simply S3 for the sake of brevity.

Step S3 can be performed by a positioning system. The positioning system can comprise a motorized device configured to generate motion. For example, the positioning system can comprise a robotic arm.

In some embodiments, step S2 and step S3 can both be performed by the positioning system.

It will be understood that the method can comprise generating the relative motion in step S3 without changing a length of a transmission path between the transmitter and the receiver.

In particular, during step S3 and step S4 the length of the transmission path between the transmitter and the receiver can be constant.

Step S3 can comprise moving the measuring device along the antenna axis.

Step S3 can comprise moving the target area along the antenna axis.

Step S3 can comprise moving the target area along the antenna axis and/or moving the measuring device along the antenna axis.

It will be understood that the relative motion between the measuring device and the target area can be performed by either moving the measuring device, or by moving the target area or by moving both the measuring device and/or the target area.

Step S3 can comprise generating vibrations of the target area. Said vibrations can either be generated via a respective motion after step S2 is performed or said vibrations can be a consequence of a motion performing during step S2.

Step S3 can comprise changing the relative position between the target area and the transmitter and/or between the target area and the receiver along the antenna axis.

Step S3 can comprise changing a distance between the target area and the transmitter along the antenna axis and/or a distance between the target area and the receiver along the antenna axis.

Step S3 can comprise generating the relative motion with one degree of freedom which is parallel to the antenna axis.

Step S3 can comprise generating a plurality of distinct relative positions between the measuring device and the target area along the antenna axis.

Each distinct relative position can be characterized by a respective distance between the target area and the transmitter along the antenna axis and/or by a respective distance between the target area and the receiver along the antenna axis.

Two relative positions can be distinct if their respective distances between the target area and the transmitter along the antenna axis are different and/or if their respective distance between the target area and the receiver along the antenna axis are different.

The relative motion can be a motion along the antenna axis with a constant speed.

The relative motion can be a lateral motion along the antenna axis with a constant speed.

The measuring device performing a plurality of measurements during the relative motion to thereby obtain a measured data set interchangeably referred to as step S4, step (S4) or simply S4 for the sake of brevity.

The method can comprise performing steps S3 and S4 in synchronization. For example, step S3 and S4 can be synchronous.

The method can comprise performing step S4 while step S3 is being performed.

Step S4 can comprises performing each of the measurements by emitting via the transmitter at least one measurement signal along the antenna axis and receiving via the receiver at least one received portion, wherein each of the at least one received portion corresponds to a respective one of the at least one measurement signal. Simply put, during each measurement in step S4 at least one measurement signal can be transmitted from the transmitter to the receiver along the antenna axes.

It will be understood that the measurement signal is an electromagnetic wave.

Receiving via the receiver at least one received portion can comprises measuring an amplitude and a phase of the at least one received portion.

Performing each of the measurements can comprises obtaining a respective measured data point indicative of each of the least one received portion. Thus, the measured data set can comprise a plurality of measured data points. Differently put, the measured data set can comprise a respective data point for each measurement in step S4.

Each measured data point can be indicative of an amplitude and phase of a respective one of the at least one received portion. For example, each measured data point can comprise an amplitude component and a phase component. For example, each measured data point can be represented using a phasor notation (however, other notations common in the art can be used as well).

Each measured data point can comprise two dimensions. For example, each measured data point can be represented by 2 numbers.

The measured data set can comprise each measured data point.

The received portion of each measurement signal can comprise a transmitted part of the measurement signal and a reflected part of the measurement signal.

The transmitted part can comprise a part of the measurement signal that is emitted by the transmitter, transmitted through the target area and received by the receiver. It can be understood that the transmitted part follows a fixed path which can correspond to the distance between the transmitter and the receiver. Said fixed path that the transmitted part follows may not depend on the relative motion between the measuring device and the target area.

The reflected part can comprise a part of the measurement signal that is emitted by the transmitter, reflected at least once by an outer surface of the target area and received by the receiver. It can be understood that the reflected part follows a varying path depending on the position of the target area along the antenna axis. Said varying path that the reflected part follows may depend on the relative motion between the measuring device and the target area.

The reflected part can comprise a first reflection that is reflected once by the first side. Said first reflection can follow a first reflection path. The first reflection path can include the paths from transmitter to the first side, from the first side to the transmitter and from the transmitter through the target area and to the receiver. The length of the first reflection path, thus, depends on the position of the target area along the antenna axis.

The reflected part can comprise a second reflection that is reflected once by the second side. Said second reflection can follow a second reflection path. The second reflection path can include the paths from the transmitter through the target are to the receiver, from the receiver to the second side and from the second side to the receiver. The length of the second reflection path, thus, depends on the position of the target area along the antenna axis.

It will be understood that the first reflection path and the second reflection path are different. The length of the first reflection path plus the length of the second reflection path equals the 4 times the length between the transmitter and the receiver, at every instant. As such, during the relative motion, if the length of one increases, the length of the other decreases.

The reflected part can comprise a first second-order reflection that is reflected twice by the first side. Said first second-order reflection can follow a first second-degree reflection path (which can also be referred to as a first second-order reflection path). It can include the paths from transmitter to the first side and from the first side to the transmitter twice and finally from the transmitter through the target area and to the receiver. The length of the first second-degree reflection path, thus, depends on the position of the target area along the antenna axis.

The reflected part can comprise a second second-order reflection that is reflected twice by the second side. Said second second-order reflection can follow a second second-degree reflection path (which can also be referred to as a second second-order reflection path). It can include the paths from the transmitter through the target are to the receiver, and afterwards twice the paths from the receiver to the second side and from the second side to the receiver. The length of the second second-degree reflection path, thus, depends on the position of the target area along the antenna axis.

It will be understood that the first second-order reflection path and the second second-order reflection path are different. The length of the first second-order reflection path plus the length of the second second-order reflection path equals the 6 times the length between the transmitter and the receiver, at every instant. As such, during the relative motion, if the length of one increases, the length of the other decreases.

It will further be understood, that higher order reflections may exist as well, defined in a similar manner as above. However, their effect can be negligible, due to the higher path length.

The method can further comprise determining based on the measured data set at least one property of the target area.

The at least one property may comprise a dielectric property of the target area.

The at least one property may comprise a scattering parameter of the target area.

The at least one property may comprise a derivable property that can be derived from or that can depend on a dielectric property of the target area. For example, the property can comprise a scattering parameter, e.g., a transmissivity and/or a reflectivity corresponding to target area.

The at least one property can indicate an effect of the device under test on electromagnetic waves that become incident on a surface of the device under test. For example, the at least one property can comprise a measure of an effect that the device under test can have on electromagnetic waves that become incident on a surface of the device under test. For example, the at least one property may indicate an attenuation, a phase shift, a frequency shift, a change of the waveform and/or a change of the direction of travel of an electromagnetic wave incident on a surface of the device under test.

The at least one property can correspond to a transmission side of the device under test and/or to a reception side of the device under test. This can be particularly the case in embodiments wherein the device under test can be a radome (i.e., radar cover), wherein the transmission side can be the side of the radome facing the radar that the radome covers and wherein the reception side can be the side of the radome opposite to the transmission side.

Determining based on the measured data set at least one property of the target area is interchangeably referred to as step S5, step S5 or simply S5 for the sake of brevity.

Step S5 can comprise estimating a separation of the transmitted part from the reflected part of an electromagnetic wave that becomes incident on the target area, such as, of the measurement signal.

Step S5 can comprise determining a reflection coefficient of the target area.

Step S5 can comprise determining a reflection coefficient of at least one side of the target area.

Step S5 can comprise determining a respective reflection coefficient of at least two side of the target area.

Step S5 can comprise determining a transmission coefficient of the target area.

Step S5 can comprise determining a transmission coefficient of the target area, when an electromagnetic signal is transmitted from a first side to a second side of the target area.

Step S5 can comprise determining two transmission coefficients of the target area, one corresponding to an electromagnetic signal being transmitted from a first side to a second side of the target area and the other one corresponding to an electromagnetic signal being transmitted from the second side to the first side of the target area.

Step S5 can comprise determining a dielectric property of the target area.

Step S5 can comprise determining a dielectric property of the device under test based on the dielectric property of at least one target area of the device under test.

Step S5 can comprise determining a scattering parameter of the target area.

Step S5 can comprise determining a scattering property of the device under test based on the scattering property of at least one target area of the device under test

Step S5 can comprise determining a property of the device under test based on respective properties of a plurality of target areas of the device under test. It will be understood that in such embodiments a plurality of target areas of the device under test can be measured.

Step S5 can comprise determining a quality metric of the measured data set.

The quality metric can be indicative of the quality of the measurements.

The quality metric can be indicative of the accuracy of step S4. For example, the quality metric can be indicative of whether step S4 is successfully completed.

The quality metric can depend on the number of measurements performed in step S4 and on the distinct relative positions between the measuring device and the target area during step S4.

The quality metric can generally be directly proportional to the number of measurements performed in step S4 and to the distinct relative positions between the measuring device and the target area during step S4.

Step S5 can comprise determining whether the target area is moving.

Step S5 can comprise estimating a movement of the target area. For example, step S5 can comprise determining a distance between the transmitter and the target area and/or determining a distance between the receiver and the target area.

Step S5 can be performed by a processing system.

Step S5 comprises detecting on the measured data set a fixed part and a position-dependent part. That is, the measured data set may exhibit a data pattern. Said data pattern may exhibit a shape around a fixed data point. The shape may be cyclical. The fixed data point may be a center point. The shape of the data pattern can depend on the position-dependent part and the fixed data point can depend on the fixed part.

Moreover, the fixed part can be due to a transmission path remaining constant during steps S3 and S4. The position-dependent part can be due to reflections paths varying during steps S3 and S4, caused by the relative motion between the measuring device and the target area.

Step S5 can thus comprise recognizing the data pattern of the measured data set.

The position-dependent part varies. Therefore, the position-dependent part can also be referred to as a varying part.

The position-dependent part can generally vary cyclically. This can be due to the cyclical behavior of the phase shift caused by changes in the reflection path.

Variation of the position-dependent part is caused by the relative motion in step S3. That is, the position-dependent part can depend on the relative position between the target area and the measuring device along the antenna axis.

The fixed part can depend on the transmitted part comprised by each received portion received in step S4.

The position-dependent part can depend on the reflected part comprised by each received portion received in step S4.

Step S5 can comprise determining at least one transmission property of the target area based on the fixed part.

Step S5 can comprise determining at least one reflection property of the target area based on the position-dependent part.

Differently put, the at least one transmission property can be determined based on the fixed data point of the data pattern. The at least one reflection property can be determined based on the shape of the data pattern (e.g., based on a diameter, diagonal or radius of the shape).

In some embodiments, detecting a fixed part and a position-dependent part may comprise fitting a circle on the measured data set, determining the fixed part based on the center of the circle and determining the position-dependent part based on a radius of the circle.

In some embodiments, detecting a fixed part and a position-dependent part may comprise transforming the measured data set to a processed data set, fitting a circle on the processed data set, determining the fixed part based on the center of the circle and determining the position-dependent part based on a radius of the circle.

In general, instead of the circle, another predefined shape can be used (e.g., an ellipse).

Transforming the measured data set to a processed data set can comprise using a dimensionality reduction technique.

The processed data set can be defined by two dimensions.

Transforming the measured data set to a processed data set can comprise using principal component analysis, which can also be referred to by its abbreviation PCA.

The two dimensions of the processed data set can correspond to the first two principal components.

Transforming the measured data set to a processed data set can comprise using singular value decomposition, which can also be referred to by its abbreviation SVD.

It will be understood that other similar algorithms may be used as well to transform the measured data set to a processed data set. Said algorithms may comprise, dimensionality reduction techniques and/or pattern recognition techniques.

The measuring device can be configured such that the transmitter and the receiver face each-other. This way a straight transmission path may exist between the transmitter and the receiver.

The measuring device can be configured such that the transmitter and the receiver are provided at a fixed distance from each-other. This can facilitate generating the relative motion between the measuring device and the target area without changing the distance between the transmitter and the receiver. In other words, this can facilitate generating the relative motion between the measuring device and the target area without changing the distance of the transmission path between the transmitter and the receiver.

The transmitter can be configured to emit electromagnetic waves with a frequency of at least 20 GHz and at most 160 GHz, such as, at least 70 GHz and at most 90 GHz. This can be particularly advantageous for measuring radomes (i.e., radar covers) used in the automotive industry.

The transmitter can comprise at least one transmitting antenna.

The receiver can be configured to receive electromagnetic waves with a frequency of at least 20 GHz and at most 160 GHz, such as, at least 70 GHz and at most 90 GHz. This can be particularly advantageous for measuring radomes (i.e., radar covers) used in the automotive industry.

The receiver can comprise at least one receiving antenna.

The transmitter can be configured as a transceiver. This can allow the transmitter to change functions as needed and/or to perform both functions (i.e., transmitting and receiving electromagnetic signals) simultaneously.

Similarly, the receiver can be configured as a transceiver. This can allow the receiver to change functions as needed and/or to perform both functions (i.e., receiving and transmitting electromagnetic signals) simultaneously.

The measuring device can define the antenna axis.

The antenna axis can extend from the transmitter to the receiver.

It will be understood that the antenna axis can be an imaginary line between the transmitter and the receiver.

The antenna axis can be coincident with a line of sight between the transmitter and receiver. Said line of sight may be present when no target area or device under test is positioned between the transmitter and the receiver.

The antenna axis can be coincident with a boresight of the transmitter.

The antenna axis can be coincident with a boresight of the receiver.

It can be advantageous to have the transmitter's boresight and the receiver's boresight aligned to maximize signal strength, reduce interference, and ensure accurate signal reception or transmission between the transmitter and the receiver. The line along which the transmitter's boresight and the receiver's boresight are aligned can be the antenna axis.

In some embodiments, the antenna axis can be coincident with an axis of symmetry of the transmitter. Typically, the boresight axis of an antenna can be aligned with the antenna's physical axis of symmetry. Particularly, in such embodiments, it can be advantageous for the antenna axis to coincide with an axis of symmetry of the transmitter.

Similarly, in some embodiments, the antenna axis can be coincident with an axis of symmetry of the receiver.

The transmitter and receiver can be aligned such that the antenna axis is an axis of symmetry of the transmitter and of the receiver. Again, this can be particularly advantageous if the boresight of the transmitter and of the receiver coincide with the transmitter's axis of symmetry and with receiver's axis of symmetry, respectively.

The target area can comprise a first side and a second side.

The first side can be opposite to the second side. This way, an electromagnetic signal incident on the first side may exit the target area from the second side and vice versa.

The first side and the second side are opposite sides of the device under test.

The target area can be a portion of the device under test around the intersection between the antenna axis and the device under test. For example, the target area may be a portion of the device under test wherein electromagnetic waves emitted by the transmitter are expected to pass through.

The target area can be a portion of the device under test that can intersect the electromagnetic waves generated by the transmitter.

The device under test can be a radome configured to cover at least in part a radar.

The radome can comprise a transmission side facing the radar and a reception side opposite to the transmission side.

The measuring device can comprise at least one reflecting surface configured to reflect electromagnetic waves. The reflecting surface can comprise a highly reflective material, e.g., metal.

The at least one reflecting surface can be configured to face the device under test. This way, the reflecting surface can capture reflections reflected by the device under test and direct them towards the device under test. This facilitates determining a reflection parameter of the target area.

The at least one reflecting surface can be configured to reflect towards a center region between the transmitter and the receiver electromagnetic waves directed away from said center region.

The at least one reflecting surface can be configured to provide a reflection path leading to the receiver. Put differently, the at least one reflecting surface can be configured to provide a reflection path converging at the receiver.

The at least one reflecting surface can be a surface wherein the transmitter and/or the receiver can be mounted on.

One of the at least one reflecting surface can be a first reflecting surface. The first reflecting surface can be positioned near the transmitter.

The first reflecting surface may be positioned behind the transmitter, such that, the transmitter can be between the first reflecting surface and the receiver.

The first reflecting surface can be positioned such that it can be equally or less proximal to the receiver then the transmitter is to the receiver.

The first reflecting surface can be configured to face the receiver.

The first reflecting surface may comprise a focal point at a region wherein the target area is expected to be positioned. Alternatively, the first reflecting surface may comprise a focal point at the receiver.

One of the at least one reflecting surface can be a second reflecting surface. The second reflecting surface can be positioned near the receiver.

The second reflecting surface can be positioned behind the receiver, such that, the receiver can be between the second reflecting surface and the transmitter.

The second reflecting surface can be positioned such that it is equally or less proximal to the transmitter then the receiver is to the transmitter.

The second reflecting surface can be configured to face the transmitter.

The second reflecting surface may comprise a focal point at a region wherein the target area is expected to be positioned.

The measuring device can further comprise a processing system.

The processing system can be configured to determine based on the measured data set at least one property of the target area.

The processing system can be configured to carry out step S5

The device under test can be a radome.

The at least one property can be transmission property.

The at least one property can be reflection property.

The at least one property can be a determination whether the target area is moving.

The at least one property can be a displacement magnitude of the target area.

Step S1 can comprises providing the measuring device, as specified above and below.

Step S1 can comprise providing the measuring system, as specified above and below.

Step S1 can comprise providing the measuring system comprising the processing system, as specified above and below, and wherein the processing system carries out step S5.

The method can further comprises providing the processing system as specified above and below and wherein the processing system carries out step S5.

Step S1 can comprise providing the measuring system (1) comprising the positioning system, as specified above and below, and wherein the positioning system carries out step S2.

Step S1 can comprise providing the measuring system (1) comprising the positioning system, as specified above and below, and wherein the positioning system carries out step S3.

Step S1 can comprise providing the measuring system (1) comprising the positioning system, as specified above and below, and wherein the positioning system carries out step S2 and step S3.

### Brief description of the figures

Figs. 1a and 1b illustrate a radar covered by a radome;
Figs. 2a and 2b illustrate a known radome measurement setup;
Figs. 3a to 3c illustrate a measurement device and system according to embodiments of the present invention;
Fig. 4 illustrates a method for determining at least one property of a target area of a device under test;
Figs. 5a to 5e depict plots of different measurement data sets that can be obtained by the device, system and/or via the method of the present invention;
Fig. 6 depicts a schematic of a radome measuring system comprising a clamp structure.

### Detailed description of the figures

In the following, exemplary embodiments of the invention will be described, referring to the figures. These examples are provided to facilitate further understanding of the invention, without limiting its scope. Moreover, in the following description, a series of features and/or steps are described. The skilled person will appreciate that unless required by the context, the order of features and steps is not critical for the resulting configuration and its effect. Further, it will be apparent to the skilled person that irrespective of the order of features and steps, the presence or absence of time delay between steps, can be present between some or all of the described steps.

Throughout the description of the drawings, like features are denoted by like reference numerals. However, for ease of illustration and brevity of the description, some reference numerals may be omitted in some of the Figures.

Throughout the description, the terms wave, electromagnetic wave, signal and electromagnetic signal are used interchangeably to refer to electromagnetic waves. Moreover, the terms emit, transmit and radiate are also used interchangeably.

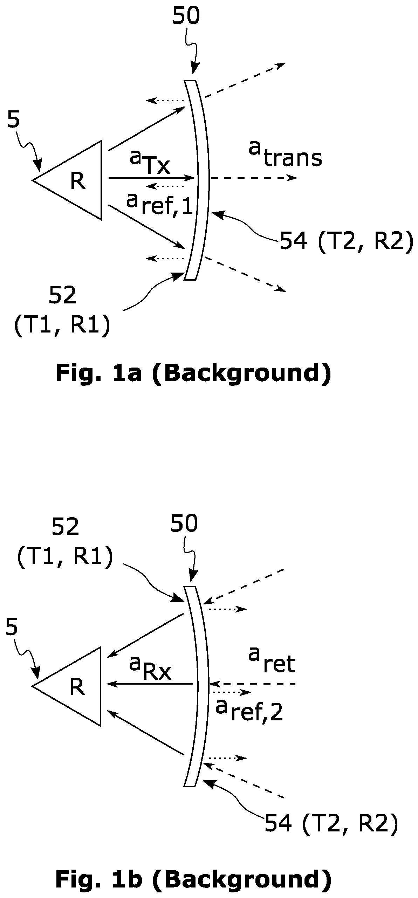

Figs. 1a and 1b illustrate a radar 5 which can be covered by a radome 50.

The radar 5 can be configured to emit and receive electromagnetic waves with a frequency between 20 GHz to 160 GHz, such as, between 70 GHz and 90 GHz. The radar 5 can typically be used in object detection systems for detecting the presence, position and/or velocity of objects. For example, the radar 5 can be an automotive radar 5. The radar 5 can be used in a vehicle for assisting automotive operations of the vehicle. For example, the radar 5 can be used in parking assistant systems, blind spot monitoring systems and brake assistant systems within a vehicle.

For example, the radar 5 can be a short-range radar (SRR) which are typically utilized for short range applications like blind-spot detection, parking aid or obstacle detection and collision avoidance. Another example of the radar 5 is the long-range radar (LRR). The LRRs typically provide better accuracy and better resolution. They can be used for measuring the distance, speed and position of objects e.g., for cross traffic alert systems. LRRs typically comprise directive antennas that can provide a higher resolution within a more limited scanning range. Long-range radar (LRR) systems can measure within ranges of 80m to 200m or greater.

The radar 5 can operate in the 77 GHz band (i.e., from 76 GHz to 77GHz) and/or in the 79 GHz band (i.e., from 77GHz to 81 GHz). The 77 GHz frequency band is generally the preferred range for radars 5 used in the automotive industry.

The radar 5 can be placed behind the radome 50 such that the saliency of the radar 5 can be reduced (i.e., the radar 5 can be hidden from view) and/or the radar 5 can be protected, e.g., from environmental conditions. Thus, electromagnetic waves traverse through the radome 50 after they are emitted from the radar 5 (Fig. 1a) and before being received by the radar 5 (Fig. 1b). Put differently, the radome 50 interrupts the line of sight of the radome 5 towards the environment.

As illustrated in Fig. 1a, the radar 5 can emit electromagnetic waves a_{Tx}. The emitted electromagnetic waves a_{Tx} become incident on a transmission side 52 of the radome 50. Herein, the transmission side 52 can refer to a surface of the radome 50 that faces the radar 5. A part of the emitted electromagnetic wave a_{Tx}, can be reflected by the transmission side 52 of radome 50. Said part can be referred to as the first reflected part a_{ref,1}. The energy of the first reflected part a_{ref,1} can depend on a first reflection coefficient R1 of the radome 50. The first reflection coefficient R1 of the radome 50 can represent a ratio of the amplitude of a reflection of an electromagnetic wave, said reflection created when the electromagnetic wave is incident on the transmission side 52 of the radome 50, over the amplitude of the electromagnetic wave incident on the transmission side 52 of the radome 50. For the depicted example, the first reflection coefficient R1 of the radome 50 can be calculated as: $R 1 = \frac{\left|{a}_{ref , 1}\right|}{\left|{a}_{Tx}\right|}$ (Eq. 1)

Another part of the emitted electromagnetic wave a_{Tx} can be transmitted through the radome 50. Said part can be referred to as the transmitted part aₜᵣₐₙₛ. The energy of the transmitted part aₜᵣₐₙₛ can depend on a first transmission coefficient T1 of the radome 50. The first transmission coefficient T1 of the radome 50 can represent a ratio of the amplitude of a transmitted part of an electromagnetic wave incident on the transmission side 52 over the amplitude of the electromagnetic wave incident on the transmission side 52. For the illustrated example, the first transmission coefficient T1 of the radome 50 can be calculated as: $T 1 = \frac{\left|{a}_{trans}\right|}{\left|{a}_{Tx}\right|}$ (Eq. 2)

It can be advantageous for the first transmission coefficient T1 to be as close to 1 as possible and for the first reflection coefficient R1 to be as close to 0 as possible. This would result in a radome 50 that can be transparent to signals emitted by the radar in the transmission direction illustrated in Fig. 1a.

The transmitted part aₜᵣₐₙₛ can reach objects in the detection range of the radar 5 and once they become incident on a surface of an object they can be reflected. A part of the electromagnetic waves reflected by the objects can be directed towards the radar 5, as illustrated in Fig. 1b. These electromagnetic waves, which can be referred to as a returned part aᵣₑₜ, can become incident on a reception side 54 of the radome 50. The reception side 54 can herein refer to a surface of the radome 54 facing the environment. The reception side 54 and the transmission side 52 can be opposite surfaces of the radome 50.

A part of the returned electromagnetic waves aᵣₑₜ, can be reflected by the reception side 54 back towards the environment. Said part can be referred to as the second reflected part a_{ref,2} (not to be confused with the first reflected part a_{ref,1}). The energy of the second reflected part a_{ref,2} can depend on a second reflection coefficient R2 of the radome 50. The second reflection coefficient R2 of the radome 50 can represent a ratio of the amplitude of a reflection of an electromagnetic wave, said reflection created when the electromagnetic wave is incident on the reception side 54 of the radome 50, over the amplitude of the electromagnetic wave incident on the reception side 54 of the radome 50. For the depicted example, the second reflection coefficient R2 of the radome 50 can be calculated as: $R 2 = \frac{\left|{a}_{ref , 2}\right|}{\left|{a}_{ret}\right|}$ (Eq. 3)

Another part of the returned electromagnetic wave aᵣₑₜ can be transmitted through the radome 50 and can be received by the radar 5. Said part can be referred to as the received part a_{Rx}. The energy of the received part a_{Rx} can depend on a second transmission coefficient T2 of the radome 50. The second transmission coefficient T2 of the radome 50 can represent a ratio of the amplitude of a transmitted part of an electromagnetic wave incident on the reception side 54 over the amplitude of the electromagnetic wave incident on the reception side 54. For the depicted example, the second transmission coefficient T2 of the radome 50 can be calculated as: $T 2 = \frac{\left|{a}_{Rx}\right|}{\left|{a}_{ret}\right|}$ (Eq. 4)

It can be advantageous for the second transmission coefficient T2 to be as close to 1 as possible and for the second reflection coefficient R2 to be as close to 0 as possible. This would result in a radome 50 that can be transparent to radar signals in the receiving direction illustrated in Fig. 1b.

The radome 50 can be modelled as a 2-port network, wherein:
- the first reflection coefficient R1 can be equivalent to the input port reflection coefficient (i.e., scattering parameter S₁₁);
- the first transmission coefficient T1 can be equivalent to the forward gain (i.e., S-parameter S₂₁),
- the second reflection coefficient R2 can be equivalent to the output port reflection coefficient (i.e., scattering parameter S₂₂); and
- the second transmission coefficient T2 can be equivalent to the reverse gain (i.e., S-parameter S₁₂).

That is, the following can be an S-parameter matrix corresponding to a radome 50 (or to a target area of the radome 50): $\left(\begin{matrix}{S}_{11} & {S}_{12} \\ {S}_{21} & {S}_{22}\end{matrix}\right) = \left(\begin{matrix}R 1 & T 2 \\ T 1 & R 2\end{matrix}\right)$ (Eq. 5)

For an efficient operation of the radar 5, it can be advantageous for the radome 50 to be as transparent as possible to the electromagnetic waves transmitted by the radar 5 or to the electromagnetic waves being returned to the radar 5 (i.e., to radar signals). That is, it can be advantageous for most of the emitted electromagnetic waves a_{Tx} to be transmitted through the radome 50, i.e., the transmitted part aₜᵣₐₙₛ to be as close to a_{Tx} as possible. Similarly, it can be advantageous for most of the returned electromagnetic waves aᵣₑₜ to be transmitted through the radome 50, i.e., the received part a_{Rx} to be as close to aᵣₑₜ as possible. In general, it can be advantageous for the radome 50 to cause as small a change as possible on the amplitude, phase, frequency, direction and shape of the electromagnetic waves traversing through the radome 50.

The effect the radome 50 can have on the transmitted and returned electromagnetic wave can depend, inter alia, on the dielectric properties of the radome 50. For example, and as discussed above, the effect the radome 50 can have on electromagnetic waves traversing through it can depend on the scattering parameters (i.e., S-parameters) of the radome 50, such as, the transmission coefficient(s) (i.e., transmissivity) T1, T2 and the reflection parameter(s) (i.e., reflectivity) R1, R2 of the radome 50. Moreover, knowing any of the dielectric properties of the radome 50 can facilitate predicting or modelling the effect that the radome 50 can have on electromagnetic waves traversing through it. In addition, it can facilitate designing and manufacturing radomes 50 with a minimal effect on the electromagnetic waves traversing through it. Further still, it can facilitate detecting radomes 50 and/or portions of radome 50 with a minimal (or maximal) effect on the electromagnetic waves traversing through it. The latter can further facilitate a quality control process of radomes 50 and/or determining the most efficient positioning of the radome 50 and the radar 5 to minimize the effect of the radome 50 on the electromagnetic waves traversing through the radome 50.

Put differently, the radome 50 can attenuate the signal emitted and received by the radar 5 - depending on the transmission coefficients T1 and T2. In addition, the radome 50 can create reflections that can interfere with the received part a_{Rx}. An example of such reflections is the first reflection a_{ref, 1}, which depend on the first reflection coefficient R1. It will be understood, that other reflections can be created by the received part a_{Rx}, which can bounce back-and-forth between the radar 5 and the transmission side 52, which again can depend on the first reflection coefficient R1. Therefore, knowledge about properties of the radome (e.g., T1, T2, R1 and R2) can facilitate increasing the accuracy of the radar 5.

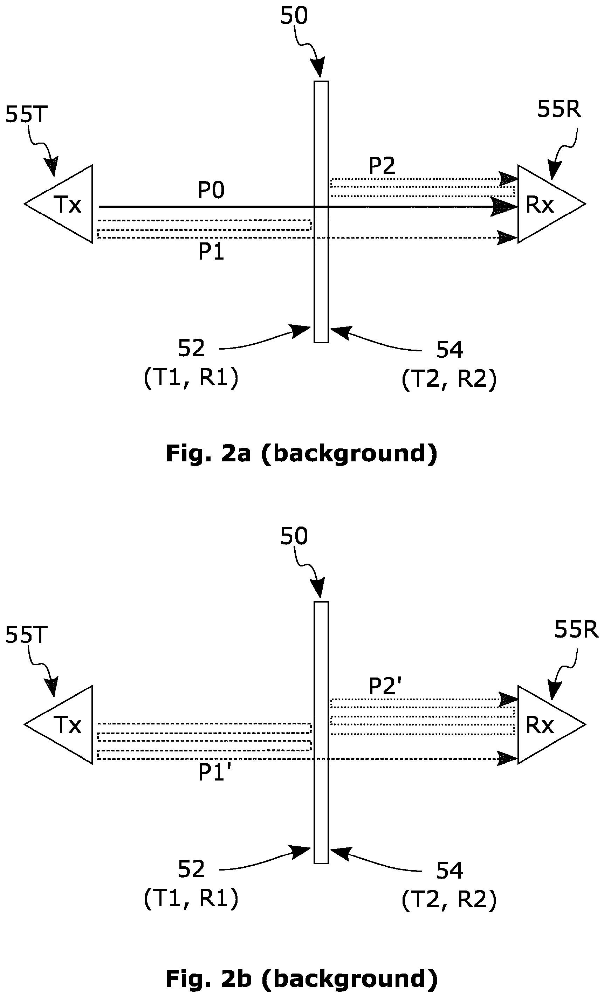

Fig. 2a illustrates a known measurement setup for determining a property of a radome 50. In particular, a radome 50 can be provided between a transmitting antenna 55T and a receiving antenna 55R - which can jointly be referred to as antennas 55. The antennas 55 can be configured to operate on the frequency band of the radar 5 with which the radome 50 is intended to be used (see Figs. 1a and 1b).

The measurement setup, illustrated in Fig. 2a, can perform transmission measurements, e.g., estimate a transmission coefficient T1, T2 of the radome 50. In the depicted example, a first transmission property T1 can be determined by transmitting a measurement signal with the transmitting antenna 55T, receiving a received portion of the measurement signal with the receiving antenna 55R and based thereon determining the first transmission property T1. Typically, the latter is done by comparing the received portion of the measurement signal with a received portion of the measurement signal obtained via a similar measurement of a target with a known transmission property T1.

However, due to reflections, the transmission measurement of the radome 50 can be noisy and therefore yield inaccurate results. In particular, the signal received by the receiving antenna 55R can comprise a superposition of both transmitted and reflected waves of the measurement signal. Transmitted waves can be those waves which can travel from the transmitting antenna 55T to the receiving antenna 55R and can only reflect from or transmit through the radome 50. It will be understood that transmitted waves can include waves that are internally reflected within the radome 50, but not those waves which reflect from any other object or from multiple objects. The latter are referred to as reflected waves. Reflected waves can be grouped by the paths of reflections that they take, where usually there can be no distinction between paths that are identical up to internal reflections on a microscopic scale (e.g., internal layer structure of the radome 50). Using this convention, in the illustrated measurement setup, the predominant signals received at the receiving antenna follow a transmission path P0, a first reflection path P1 and a second reflection path P2.

The transmission path P0 is the shortest path that the measurement signal can follow before being received by the receiving antenna 55R. It comprises a length equal to the distance between the antennas 55. Part of the measurement signal that follows the transmission path P0 can be referred to as a transmitted part of the measurement signal. The transmitted part can be received first by the receiving antenna 55R and it can also comprise the highest power (compared to other parts discussed below).

The first reflection path P1 can be followed by signals that are reflected by the first side 52 of the radome 50, then by at least one first reflecting surface of or near the transmitting antenna 55T, then are transmitted through the radome 50 and received by the receiving antenna 55R. The second reflection path P2 can be followed by signals that are transmitted through the radome 50 first, reflected by at least one second reflecting surface of or near the receiving antenna 55R, then are reflected by the reception side 54 of the radome 50 and received by the receiving antenna 55R.

It will be understood that reflections following other paths can also be received by the receiving antenna 55R. Fig. 2b illustrates, as an example, two other paths P1' and P2' - which can be referred to as second-degree reflection paths and the respective reflections as second-degree reflections. In particular, the second-degree reflection path P1' is similar to the first reflection path P1 and differs only in that the reflection bounces between the transmitting antenna 55T and the first side 52 of the radome 50 two times before transmitting through the radome 50. Similarly, the second-degree reflection path P2' is similar to the second reflection path P2 and differs only in that the reflection bounces between the reception side 54 of the radome 50 two times before being received by the receiving antenna 55R.

As discussed above in relation to Fig. 1, for a correct determination of the first transmission coefficient T1 only signals following the transmission path P0 are relevant (see equations 2 and 4). However, as illustrated in Figs. 2a and 2b, the receiving antenna 55R can also receive signals following other paths (e.g., P1, P2, P1' and P2').

Thus, for an accurate measurement of a radome, it can be advantageous to separate transmitted parts from the reflected parts of the measurement signal.

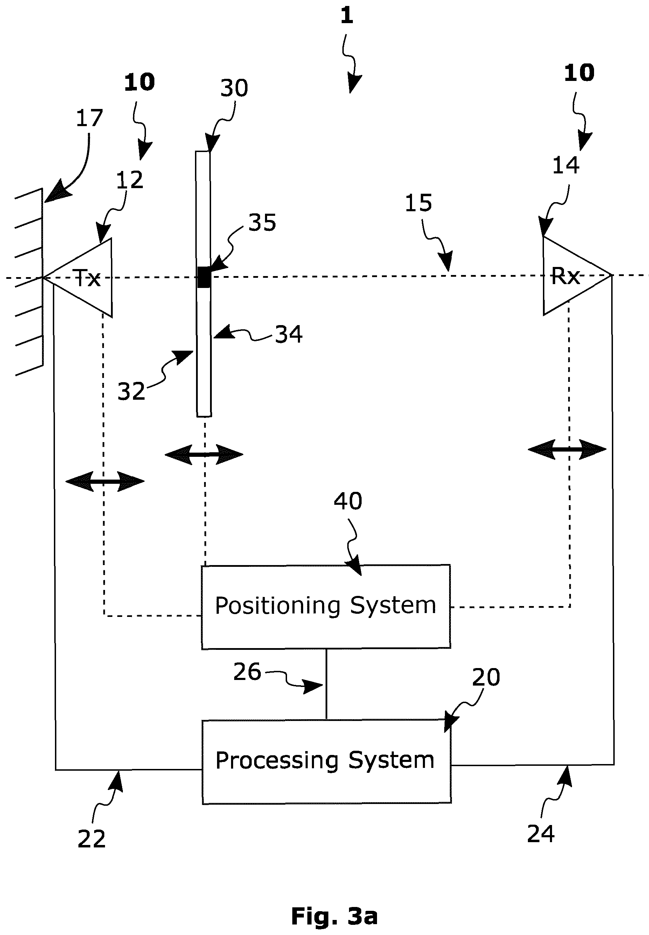

Fig. 3a illustrates a measuring system 1 according to embodiments of the present invention. The measuring system 1 can comprise a measuring device 10, a processing system 20 and a positioning system 40.

The measuring device 10 can comprise a transmitter 12 and a receiver 14 facing each-other. The transmitter 12 and the receiver 14 can be provided at a fixed distance from each-other. In some embodiments, the processing system 20 can be part of the measuring device 10. That is, the processing system 20 and the measuring device 10 can form a single device. Hereinafter, whenever referring the measuring device 10, unless otherwise specified, both embodiments are meant - i.e., the measuring device 10 comprising the processing system 20 and the measuring device 10 and the processing system 20 being separate from each other. A device under test 30 (i.e., DUT) can be provided between the transmitter 12 and the receiver 14. It will be understood that the DUT may not be a part of the measuring system 1, but rather a part that can be measured by the measuring system 1.

The transmitter 12 can be configured to emit electromagnetic waves. Preferably, the transmitter 12 can be configured to emit electromagnetic waves with a frequency between 20 GHz to 160 GHz, such as, between 70 GHz and 90 GHz. The transmitter 12 can comprise at least one transmitting antenna 12.

The receiver 14 can be configured to receive electromagnetic waves. Preferably, the receiver 1 can be configured to receive electromagnetic waves with a frequency between 20 GHz to 160 GHz, such as, between 70 GHz and 90 GHz. The receiver 14 can comprise at least one receiving antenna 14.

In some embodiments, the transmitter 12 and/or receiver 14 can be configured as transceivers, i.e., can be configured to emit and receive electromagnetic waves.

The measuring device 10 can define an axis 15 between the transmitter 12 and receiver 14, which can be referred to as an antenna axis 15. It will be understood that the antenna axis 15 can refer to an imaginary line between the transmitter 12 and receiver 14. The antenna axis 15 can be coincident with a line of sight between the transmitter 12 and receiver 14. The antenna axis 15 can also be referred to as a visual axis 15. For example, the antenna axis 15 can be coincident with a boresight of the transmitter 12. The latter can refer to an axis along which the transmitter 15 can emit the maximum power, i.e., the axis of maximum gain. Alternatively or additionally, the antenna axis 15 can be coincident with a boresight of the receiver 14. The latter can refer to an axis along which the receiver 14 can sense (or receive) the maximum power, i.e., the axis of maximum gain. For most antennas the boresight is the axis of symmetry of the antenna. Therefore, in some embodiments, the antenna axis 15 can be coincident with an axis of symmetry of the transmitter 12 and/or with an axis of symmetry of the receiver 14. The transmitter 12 and the receiver 14 can be aligned such that the antenna axis 15 can be an axis of symmetry of both the transmitter 12 and of the receiver 14.

The DUT can be provided between the transmitter 12 and receiver 14, such that it can intersect the antenna axis 13 and such that a first side 32 can face the transmitter 12 and a second side 34 can face the receiver 14. The first side 32 and the second side 34 can be opposite sides of the DUT. That is, the first side 32 can refer to the side of the DUT that can face the transmitter 12 and the second side 34 can refer to the side of the DUT that can face the receiver 14. A portion of the DUT around the intersection between the antenna axis 15 and the DUT can be referred to as the target area 35, which is illustrated in Fig. 3a as a filled box. The target area 35 can refer to an area of the DUT which can intersect signals generated by the transmitter 12.

The DUT can for example be a radome 50 (see Figs. 1a, 1b). That is, the device under test 30 can be a radome 50 configured to cover at least in part a radar 5. It will be understood, that the first side 32 of the DUT (i.e., the side of the DUT facing the transmitter 12) can be any side of the radome 50. For example, the first side 32 can be the transmission side 52 of the radome 30. Similarly, the second side 34 of the DUT (i.e., the side of the DUT facing the receiver 14) can be any side of the radome 50. For example, the second side 34 can be the reception side 54 of the radome 30. Generally, any two opposite sides of the radome 30 can form the first side 32 and the second side 34, when the radome 30 is the DUT. The allocation of sides of a radome 30 as the first side 32 and the second side 34 can be determined based on the orientation of the radome 30 when positioned between the transmitter 12 and the receiver 14.

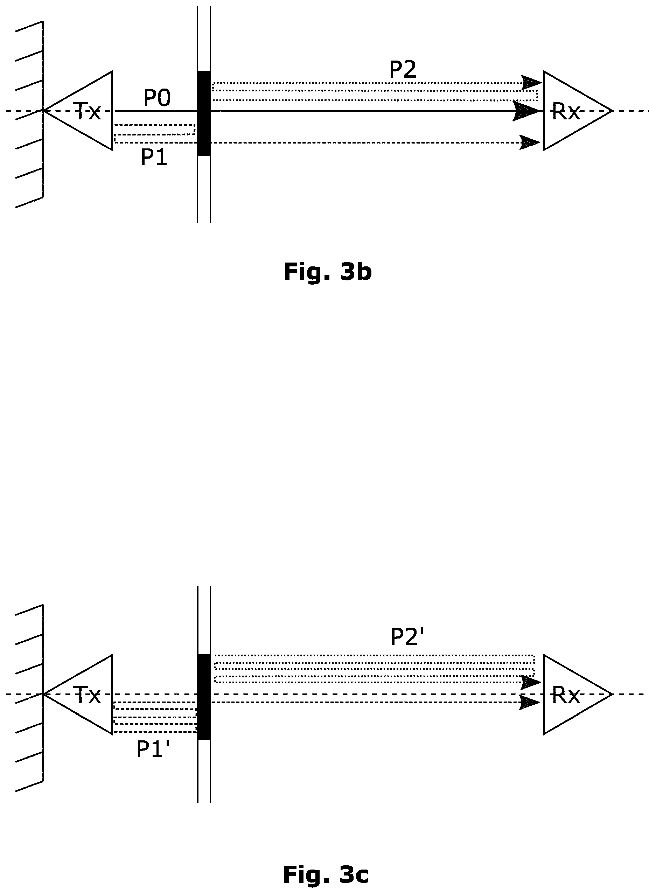

The reflection paths P0, P1, P1', P2 and P2' illustrated in Figs. 2a and 2b can also be present, mutatis mutandis, in the measuring device 10 illustrated in Fig. 3a. That is, similar reflection paths can be created by the measuring device 10 and the by the target area 35. This is illustrated in Figs. 3b and 3c, which shows a (not up to scale) magnified view of the measuring device 10 around the target area 35. Not to overload the Figs. 3b and 3c the referral numbers have been omitted.

As illustrated in Fig. 3a, the target area 35 can be provided closer to the transmitter 12 than to the receiver 14. This can be particularly advantageous for determining a reflection property of the first side 32. The closer the target area 35 can be to the transmitter 12 the higher the likelihood that reflections created by the first side 32 can be reflected back towards the receiver 14, e.g., the higher the likelihood that there will be signals following the first reflection path P1 illustrated in Fig. 3b. Moreover, the closer the target area 35 can be to the transmitter 12, the shorter the first reflection path P1 can be and the longer the second reflection path P2 can be. This can be readily seen, e.g., by comparing Fig. 2a with Fig. 3b. Thus, reflections following the first reflection path P1 can be dominant, while reflections following the second reflection path P2 can be negligible. The same is true, mutatis mutandis, for the second order reflection paths P1' and P2' illustrated in Fig. 3c.

Alternatively, the target area 35 can be provided closer to the receiver 14 than to the transmitter 12. This can be particularly advantageous for determining a reflection property of the second side 34. The closer the target area 35 can be to the receiver 14 the higher the likelihood that there can be signals reflected by the second side 34 and received by the receiver 14, e.g., the higher the likelihood that there will be signals following the second reflection path P2 illustrated in Fig. 3b. Moreover, the closer the target area 35 can be to the receiver 14, the longer the first reflection path P1 can be and the shorter the second reflection path P2 can be. This can be readily seen, e.g., by comparing Fig. 2a with Fig. 3b. Thus, reflections following the second reflection path P2 can be dominant, while reflections following the first reflection path P1 can be negligible. The same is true, mutatis mutandis, for the second order reflection paths P1' and P2' illustrated in Fig. 3c.

Moreover, it can be advantageous for the target area 35 to be substantially perpendicular with the antenna axis 15. For example, an angle between the antenna axis 15 and a surface of the target area 35 can be at least 80° and at most 100°, preferably at least 85° and at most 95°, even more preferably at least 88° and 92°. Put differently, an angle between the antenna axis 15 and a perpendicular line with a surface of the target area 35 can be at most 10°, preferably at most 5°, even more preferably at most 2°. Ideally, the antenna axis 15 can be perpendicular to the target area 35. This can be advantageous as it can increase the likelihood that signals reflected by the first side 32 and/or by the second side 34 can be received by the receiver.

In this regard, providing the target area 35 closer to the transmitter 12 or closer to the receiver 14 can lead to more robustness against slight angle errors in positioning the target area 35. In other words, even if the target area 35 may not be positioned completely perpendicularly with the antenna axis 15, the likelihood that reflections created by the target area 35 can be reflected away from the measuring device 10 and not be received by the receiver 14 can be reduced by providing the target area 35 closer to the transmitter 12 or closer to the receiver 14.

The measuring device 10 can optionally comprise reflecting surface 17 which can be advantageous to increase the likelihood that signals reflected by the first surface 32 can be reflected back towards the receiver. Surfaces of the transmitter 12 can also reflect towards the receiver 14 signals that were initially reflected by the first side 32. However, the transmitter 12 may comprise a small surface area. Therefore, signals which were initially reflected by the first side 32 of the target area 35 may "miss" the transmitter 12 and may therefore travel away and not be directed towards the receiver 14. Reflecting surface 17 can alleviate this by providing additional surface for "capturing" and directing signals towards the receiver 14. Said reflecting surface 17 can preferably be provided near the transmitter 12, as illustrated in Fig. 2. The reflecting surface 17 can be a surface of a component wherein the transmitter 12 is mounted or connected to. For example, the reflecting surface 17 can be a surface of an up-converter that can typically be positioned behind the transmitter 12. Said reflecting surface 17 can also be referred to as a first reflecting surface 17.

A similar reflecting surface (not shown) can also be provided on the receiver side. That is a second reflecting surface (not shown) can be provided near the receiver 12. It can be advantageous as it can increase the likelihood that signals reflected by the second surface 34 can be reflected back towards the second surface 34, wherein they can be reflected again towards the receiver 14. For example, the second reflecting surface can be a surface of a down-converter that can typically be positioned behind the receiver 14.

An aim of the present invention can be to measure one or multiple (idealized) points 35 or target areas 35. Throughout the description, the terms point 35, target point 35 or target area 35 can be used interchangeably. It will be understood that practically it may not be possible to measure an idealized point 35, but rather a target area 35 is measured.

All measurements for any target area 35 can be taken while a normal axis (not shown) spanned by the target area 35 can be parallel to the antenna axis 15. The normal axis spanned by the target area 35 can refer to an axis perpendicular with a surface of the target area 35. Said surface can for example be the first side 32.

Additionally or alternatively, all measurements for any target area 35 can be taken while a normal vector (not shown) pointing "out" of the target area 35 can be facing the transmitter 12. Said vector of the target area 35 can refer to a vector which can be perpendicular with a surface of the target area 35 and can point away from said surface. Said surface can be the first side 32. Moreover, said vector can be parallel to the antenna axis 15.

Additionally or alternatively, all measurements for any target area 35 can be taken while the target area 35 can be positioned in such a way that it can intersect the antenna axis 15.

Considering some or all of the above three conditions, there can be two degrees of freedom, along which the DUT and/or the measuring device 10 can be moved without infringing said conditions; namely, motion along (i.e., parallel) the antenna axis 13 and rotation around the antenna axis 13. Typically, the latter may not influence the measurements as it can typically be assumed that the material properties of the target area 35 are isotropic. For most applications of the present invention this can be a reasonable assumption. That is, the present invention can typically (but not necessarily) be used to measure DUTs which material properties within a target area 35 are isotropic. It will be understood, that the present invention is not limited to only these types of the DUTs.

A main idea underlying the present invention can be that determining a property of a target area 35 of a DUT can be improved by performing multiple measurements at multiple different relative positions between the target area 35 and the measurement device 10. Unless otherwise specified, a "relative position" can refer to the relative position between the target area 35 and the measuring device 10. In particular, the "relative position" can refer to the relative position between the target area 35 and the transmitter 12 and/or to the relative position between the target area 35 and the receiver 14.

Moreover, unless otherwise specified, a "different relative position" or a "distinct relative position" can refer to a distance between a target area 35 and the transmitter 12 along the antenna axis 15 and/or to a distance between a target area 35 and the receiver 14 along the antenna axis 15. In other words, two relative positions can be different or distinct if the respective distances between a target area 35 and the transmitter 12 along the antenna axis 15 and/or the respective distances between a target area 35 and the receiver 14 along the antenna axis 15 are different.

Performing multiple measurements at multiple distinct relative positions can allow for better and more robust signal estimation.

Moreover, performing multiple measurements at multiple distinct relative positions can allow to significantly ease the restrictions on how each measurement of the plurality of measurements can be performed, without reducing the overall accuracy of the estimated parameter. It may not be necessary to know the exact location on the antenna axis 15 of the target area 35 during a measurement. It may not be necessary to know the exact difference between the different relative positions during measurements. A priori it may not be necessary to know the exact number of measurements that are taken. It may also not be necessary to guarantee that all measurements were taken at distinct relative positions or at fixed time intervals. In general, it can be advantageous that the measurements that occur at distinct relative positions are not only a small fraction of the measurements. This can be either done by ensuring that measurements can predominantly be taken while the target area 35 and the measuring device 10 can be in distinct positions and/or by suitable post-processing algorithms. It will be understood that all of the above, although not necessary, can be preferable and can be utilized to facilitate determining at least one property of the radome. For example, in some embodiments, comprising and/or obtaining positional information of the target area 35 can be advantageous.

To perform such measurements at different relative positions a relative motion between the measuring device 10 and the target area 35 can be generated. Said relative motion can be generated by the positioning system 40 - as illustrated by the double arrows in Fig. 3a. For example, the relative motion can be generated by moving the measuring device 10 along the antenna axis 15 while keeping the target area 35 fixed. This can be done using, for example, a linear stage 40 or robotic arm 40, on which the measuring device 10 can be fixed. Alternatively or additionally, the relative motion can be generated by moving the target area 35 along the antenna axis while keeping the measuring device 10 fixed. This can be done using for example a linear stage 40 or a robotic arm 40 which can approximately maintain the orientation of the target area 35 relative to the measuring device 10 while moving the target area 35 along the antenna axis 15. The relative motion can also be generated by moving both the target area 35 and the measuring device along the antenna axis 15. Alternatively or additionally, the relative motion can be generated using indirect motions such as oscillations or vibrations of the target area 35 along the antenna axis 15 caused for example by the material properties of the target area 35 and a previous motion.

Changing the relative position between the measuring device 10 and the target are 35 can cause the distance between the target area 35 and the transmitter 12 and/or the distance between the target area 35 and the receiver 14 to change. As a result, the path followed by the reflected parts of the measurement signal can change, while the path followed by the transmitted part remains the same. More particularly, referring to Fig. 3b, the length of the reflection paths P1 and P2 depends on the position of the target area 35 along the antenna axis 15. The same is true for the second order reflections paths P1' and P2' illustrated in Fig. 3c and for higher order reflection paths (not shown). On the other hand, the length of path P0 can depend only on the distance between the transmitter 12 and the receiver 14.

Variations in the distance between the target area 35 and the transmitter 12 can induce the following effects:
1. As the distance between the target area 35 and the transmitter 12 increases, so does the first reflection path P1. This can result in a phase shift of the received signal that follows the first reflection path P1.
2. As the distance between the target area 35 and the transmitter 12 increases, the second reflection path P2 decreases. This can result in a phase shift of the received signal that follows the second reflection path P2.
3. As the distance between the target area 35 and the transmitter 12 increases, due to the higher free space attenuation resulting from the longer path P1 followed by the first reflection, the magnitude of the first reflection as received by the receiving antenna decreases. For similar reasons, the magnitude of the second reflection increases.
4. The transmitted part of the signal can remain unchanged, except for negligible variations that could occur if the target area is not homogenous, in which case a movement along the antenna axis marginally influences the area through which rays are transmitted.

In general, for any signal path, changing the distance of the path by *d* would cause a phase shift on the signal following said path which can be calculated as: $ϕ = \left(\left(360⋅\frac{2 d}{λ}\right)% 360\right) °$ (Eq. 6) wherein λ is the wavelength of the signal following said path and % is the modulo operator. The present invention can utilize this effect to separate the reflected waves from the transmitted waves from measurements taken at distinct relative positions and to thereby determine at least one property of the target area 35. For example, the present invention can estimate reflectivity. Additionally or alternatively, the present invention can also improve transmission measurements. Estimating transmittivity can be susceptible to small errors from the influence of reflections. Since the present invention can allow to separate transmitted parts from reflected parts, transmittivity estimates can therefore be more accurate. Further still, the present invention can also allow to estimate small movements or oscillation of the target area 35 and/or DUT. Alternatively or additionally, the present invention can allow to infer material properties such as the stiffness of a DUT.

In a preferred embodiment, the transmitter 12 and the receiver 14 can be horn antennas 12, 14. The horn antennas 12, 14 can be advantageous due to their substantial directivity which can facilitate directing the emitted electromagnetic waves toward a preferred direction, such as, along the antenna axis 15. Further, a horn antenna 12, 14 can also be advantageous as it can allow a gradual transition structure, realizing impedance matching with open air and thus allowing for efficient emission/reception of the electromagnetic waves.

Furthermore, horn antennas 12, 14 can emit linearly polarized electromagnetic waves. For example, it can be advantageous to match the polarization of the transmitter 12 and receiver 14 with the polarization of the radar 5 (see Fig. 1) that will be covered by the DUT - in this case the DUT being a radome 50. This can allow for more accurate results to be obtained based on the rationale that the more similar the test conditions are to the real conditions the more accurate results can be obtained. A radar 5 (see Fig. 1) can be configured to transmit electromagnetic waves with different polarizations, such as, linear (horizontal or vertical), circular (clockwise or anti-clockwise), epileptic, etc. However, in most cases, radar sensors 5 are configured to emit electromagnetic waves with linear polarization. Thus, the utilization of horn antennas 12, 14 can be advantageous for testing radomes 50 of radars 5 that emit linearly polarized electromagnetic waves.

Nevertheless, the transmitter 12 and the receiver 14 can also be configured for emitting and/or receiving electromagnetic waves with other polarizations, such as, circular or epileptic polarization.

As discussed, the measuring system 1 can comprise a data processing system 20, which can also be referred to as a processing system 20 for the sake of brevity. The processing system 20 can comprise one or more processing units configured to carry out computer instructions of a program (i.e., machine readable and executable instructions). The processing unit(s) can be singular or plural. For example, the processing system 20 may comprise at least one of CPU, GPU, DSP, APU, or FPGA. The processing system 20 can comprise memory components, such as main memory (e.g., RAM), cache memory (e.g., SRAM) and/or secondary memory (e.g., HDD, SDD). The processing system 20 may comprise volatile and/or non-volatile memory such an SDRAM, DRAM, SRAM, Flash Memory, MRAM, F-RAM, or P-RAM. The processing system 20 can comprise internal communication interfaces (e.g., busses) configured to facilitate electronic data exchange between components of the data processing system 20, such as the communication between the memory components and the processing components. The data processing system 20 can comprise external communication interfaces configured to facilitate electronic data exchange with devices external to the data processing system 20. The data processing system 20 can be configured for wired and/or wireless data communication. For example, the processing system 20 can be configured to transfer electronic data using a standardized communication protocol. For example, the data processing system can comprise a network card and/or a USB port. The processing system 20 can comprise a system-on-chip comprising processing units, memory components and busses.

The processing system 20 may be a centralized or distributed computing system. In some embodiments, the processing system 20 may be external to the measuring device 10. Alternatively, the processing system 20 and the device 10 may be integrated into a single device. For example, the measuring device 10 may comprise the processing system 20.

The processing system 20 can facilitate automating the operations of the measuring device 10 and/or of the measuring system 1. That is, the processing system 20 may control the measuring device 10 such that the measurements of the target area 35 and/or the relative motions are performed automatically. The processing system 20 can be operatively connected to other components. More particularly, processing system 20 may be operatively connected to the transmitter 12, receiver 14 and/or the positioning system 40. The term operatively connected can refer to wired or wireless connections configured for electronic data exchange.

The processing system 20 can be connected with the transmitter 12 by a transmitter connector 22. Thus, the processing system 20 can trigger the transmitter 12 to emit an electromagnetic wave with a preset pattern in time and frequency. For example, the processing system 20 can trigger the transmitter 12 to electromagnetic waves with a preset bandwidth centered around a preset frequency. The processing system 20 can trigger the transmitter 12 to emit electromagnetic waves within the range of frequencies and bandwidths supported by the transmitter 12 (i.e., based on the geometry or physical structure of the transmitter 12 a certain range of frequencies can be transmitted efficiently).

Similarly, the processing system 20 can be connected with the receiver 14 by a receiver connector 24. Thus, the processing system 20 can receive signals provided by the receiver 14 and/or data indicative of the signal sensed by the receiver 14. The processing system 20 can be configured to identify signal reception by the receiver 14 (or alternatively identify when the receiver 14 is simply "listening" to background noise). The differentiation of signal reception (i.e., reception of the signal that is transmitted by the transmitter 12) from background noise (and/or interference) at the receiver 14 can be done using power squelching - i.e., only signals above a certain power level can be considered as signal reception, while the rest is considered as background noise. When a signal reception is identified, the processing system 20 can use information regarding the transmitted signal and information regarding the receiving signal to measure dielectric properties of the medium(s) between the transmitter 12 and receiver 14.

The transmitter connector 22 and receiver connector 24 can be electrical conductors 22, 24, such as, wires 22, 24, preferably coaxial cables 22, 24. In such embodiments, the processing system 20 can trigger the transmitter 12 by sending an electrical signal through the conductor 22. The transmitter 12 can then convert the electrical signals into electromagnetic radiation. The receiver 14 can convert electromagnetic radiation into electrical signals, which can then be transmitted through the conductor 24 to the processing system 20.

Alternatively, the transmitter connector 22 and receiver connector 24 can be waveguides 22, 24. In such embodiments, the processing system 20 can be configured to trigger the transmitter 12 by generating electromagnetic waves and transmitting those through the waveguide 22 to the transmitter antenna 10T. The transmitter 12 can be configured as an interface between the waveguide 22 and open-air for an efficient transmission of the waves. The receiver 14 can similarly provide an interface between open-air and the waveguide 24, allowing electromagnetic radiation to be received and transmitted through the waveguide 24 to the processing system 20.

The processing system can further be operatively connected with the positioning system 40 via a positioning system connector 26. Thus, the processing system 20 can trigger the positioning system 40 to generate a relative motion between the target area 35 and the measuring device 10. For example, the processing system 20 can trigger the positioning system 40 generate the relative motion with a preset pattern, e.g., with one or more preset velocities and/or with one or more preset durations. The positioning system connector 26 can be configured for electronic data exchange between the processing system 20 and the positioning system 40. This can allow the processing system 20 to provide instructions to the positioning system 40 and/or the positioning system 40 to provide status data to the processing system 20. Status data can for example indicate the relative position between the measuring device 10 and the target area 35.

In some embodiments, the received signal can be provided to the processing system 20 in the same frequency range as transmitted from the transmitter 12 and received by the receiver 14. In other words, the received signal can be provided to the processing system 20 in the radio-frequency (RF) range. Similarly, the processing system 20 can provide the signal to the transmitter 12 in the RF range. Put differently, the measurement signal may not undergo any frequency conversion between the processing system 20 and the transmitter 12 and between the processing system 20 and the receiver 14.

Alternatively, the measuring system 1 can comprise a respective frequency converter for the transmitter 12 and for the receiver 14. More particularly, the measuring system 1 can comprise an up-converter that can be used between the processing system 20 and the transmitter 12 and a down-converter that can be used between the receiver 14 and the processing system 20. Thus, the processing system 20 can operate at an intermediate frequency IF (e.g., 1 - 6 GHz) or at baseband (0 - 3 GHz), while the transmitter 12 and receiver 14 can transmit and/or receive RF signal at higher frequencies (i.e., radio frequency range, e.g., 20 - 160 GHz). This can be advantageous as the processing system 20 can be configured to operate at a certain low frequency range (e.g., IF range or baseband) independent of the RF range of the signals transmitted between the transmitter 12 and receiver 14.

In some embodiments a surface of the up-converter facing the receiver 14 can form (at least a part) of the reflecting component 17. Alternatively or additionally, a surface of the down-converter facing the transmitter 12 can form (at least a part) of the second reflecting component (not shown).

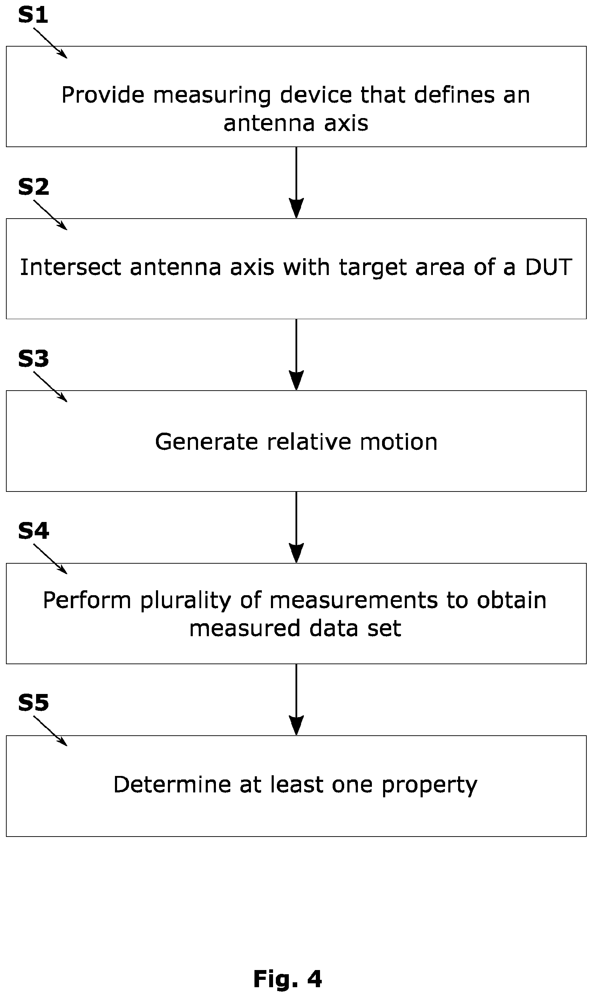

The processing system 20 can be configured to control the measuring system 1 and/or to carry out particular method steps for determining at least one property of a target area 35 of the DUT. For example, the processing system 20 can be configured to carry out step S5 of the method according to the present invention (illustrated in Fig. 4). Alternatively or additionally, the processing system 20 can be configured to control the measuring device 10 to carry out step S4 of the method according to the present invention. Alternatively or additionally, the processing system 20 can be configured to control the positioning system 40, to carry out step S2 and/or S3 of the method according to the present invention.

The measuring device 10 can be configured to carry out step S4 of the method according to the present invention.

The positioning system 40 can be configured to carry out at step S2 and/or S3 of the method according to the present invention. Preferably, the positioning system 40 can be configured to carry out at least step S3.

In general the measuring system 1 can be configured to carry out the method according to the present invention.

Fig. 4 illustrates via a flowchart a method according to the present invention for measuring at least one property of a target area of a device under test (DUT). In the following description of Fig. 4, for the sake of clarity, reference signs used in Fig. 3a are used to refer to like elements.

In a first step S1 the method can comprise providing a measuring device 10 comprising a transmitter 12 configured to emit electromagnetic waves and a receiver 14 configured to receive electromagnetic waves. The measuring system 10 can define an antenna axis 15 between the transmitter 12 and the receiver 14. For example, step S1 can comprise providing the measuring device 10 illustrated in Fig. 3a and discussed above. In some embodiments, step S1 can comprise providing the measuring system 1 illustrated in Fig. 3a and discussed above. That is, additionally, step S1 can comprise providing the processing system 20 and/or the positioning system 40.

In a step S2 the method can comprise arranging the measuring device 10 and/or the DUT such that the antenna axis 15 can intersect the target area 35 of the DUT. That is, the target area 35 can be provided between the transmitter 12 and the receiver 14 of the measuring device 10 such that the antenna axis 15 can intersect the target area 35 of the DUT. Thus, a signal emitted by the transmitter 12 can transmit through the target area 35 and/or can be reflected by the target area 35.

Step S2 can comprise arranging the measuring device 10 and/or the DUT such that a first side 32 of the target area 35 can face the transmitter 12 and a second side 34 of the target area 35 can face the receiver 14. Thus, a signal generated by the transmitter 12 can become incident on the first side 32 of the target area 35. Step S2 can comprise arranging the measuring device 10 and/or the DUT such that a normal axis spanned by the target area 35 can be parallel to the antenna axis 15. Alternatively or additionally, step S2 can comprise arranging the measuring device 10 and/or the DUT such that a normal vector pointing "out" of the first side of the target area 35 can point towards the transmitter and/or can be parallel to the antenna axis 15.

In some embodiments, step S2 can comprise arranging the measuring device 10 and/or the DUT such that the target area 35 of the DUT can be at an arbitrary position along the antenna axis 15. That is, in step S2 there can be no restriction on where along the antenna axis 15 the target area 35 can be provided. Put differently, step S2 can comprise arranging the measuring device 10 and/or the DUT such that the target area 35 of the DUT can comprise an arbitrary distance from the transmitter 12 and/or from the receiver 14.

In some embodiments, step S2 can comprise arranging the measuring device 10 and/or the DUT such that the target area 35 of the DUT can be closer to one of the transmitter 12 and receiver 14 than to the other. For example, the distance between the target area 35 and the transmitter 12 or receiver 14, whichever is closest, can be at least 10% and at most 45%, preferably at least 20% and at most 25% of the distance between the transmitter 12 and receiver 14. For example, the distance between the transmitter 12 and the receiver 14 can be 25 cm and the distance between the target area 35 and the transmitter 12 or receiver 14, whichever is closest, can be between at least 3 cm and at most 10 cm, preferably at least 5 cm and at most 6 cm. Again, even in such embodiments, arranging the measuring device 10 and/or the DUT such that the target area 35 can comprise an exact distance from the transmitter 12 and/or receiver 14 may not be required. It can be sufficient to provide the target area 35 in a predetermined (preferred) region along the antenna axis 15.

In some embodiments, the target area 35 of the DUT can be a predetermined area of the DUT. In such embodiments, in step S2 information about the position of the target area 35 within the DUT can be used to arrange the measuring device 10 and/or the DUT such that the antenna axis can intersect the predetermined target area 35. For example, only a particular portion of the DUT may need to be measured. Said portion can for example be a portion that can intersect signals transmitted and/or received by a radar 5 (see Fig. 1) when the DUT is in use as a radome 50. In such cases, the target area 35 can be comprised by said portion. Moreover, in such embodiments, several target areas 35 can be defined within said portion and for each target area 35 steps S2 to S5 can be repeated.

Alternatively, the target area 35 can be defined as a region of the DUT surrounding the intersection point where the antenna axis 15 can intersect the DUT. That is, there can be no particular portion of the DUT that needs to be measured. For example, the entire DUT may need to be measured. In another example, the DUT can be homogeneous.

Step S2 can be performed by moving the measuring device 10 towards the DUT and/or by moving the DUT towards the measuring device 10. Step S2 can be carried out by the positioning system 40 - discussed above and illustrated in Fig. 3a. For example, step S2 can carried out by a linear stage 40 and/or by a robotic arm 40 configured to handle the measuring device 10 and/or the DUT.

In a step S3 the method can comprise generating a relative motion between the measuring device 10 and the target area 35. The relative motion can be generated by moving the measuring device 10, by moving the DUT and/or via indirect motions such as oscillations of the target area 35 along the antenna axis 15 caused for example by the material properties of the target and a previous motion. The relative motion can be generated by the positioning system 40 - discussed above and illustrated in Fig. 3a. For example, step S3 can carried out by a linear stage 40 and/or by a robotic arm 40 configured to handle the measuring device 10 and/or the DUT.

The relative motion can be configured to change the relative position between the target area 35 and the measuring device 10.

Preferably, the relative motion can be performed along the antenna axis 15. That is, the relative motion can preferably be directed parallel to the antenna axis 15. Put differently, the relative motion can preferably be performed with one degree of freedom (DOF), said DOF being directed parallel to the antenna axis 15. This way the intersection of the target area 15 by the antenna axis 15 can be maintained during the relative motion. Moreover, only the position along the antenna axis 15 of the target area 15 can be changed. In other words, only the distance of the target area 15 from the transmitter 12 and/or from the receiver 14 can be changed.

Put differently, the relative motion can be performed such that the normal axis spanned by the target area 35 can remain parallel to the antenna axis 15. Additionally or alternatively, the relative motion can be performed such that a normal vector pointing out of the target area 35 can remain pointing toward the transmitter 12 (or receiver 14) and/or parallel to the antenna axis 15. Additionally or alternatively, the relative motion can be performed such that an intersection between the antenna axis 15 and the target area 35 can be maintained.

In other words, the relative motion can be performed such that the pitch and yaw of the target area 15 can remain unchanged. Herein pitch and yaw directions can be defined with respect to the antenna axis 15, such that they can be perpendicular with each other and with the antenna axis 15. In this case, for example, the antenna axis 15 can be a rotational axis defining the roll direction. Motion in the pitch direction can also be referred to as a tilt motion and motion in the yaw direction can also be referred to as pan motion.

Therefore, in preferred embodiments, there can only be two degrees of freedom, along which the relative motion can be performed; namely, motion along (i.e., parallel with) the antenna axis 13 and rotation around the antenna axis 13 (i.e., roll). Put differently, during the relative motion it can be preferable to have lateral motion along the antenna axis 15. In addition, roll motion around the antenna axis 15 may be allowed. Typically, the latter may not influence the measurements as it can be assumed that the material properties of the target area 35 are isotropic. For most applications of the present invention this can be a reasonable assumption. Moreover, this can be particularly the case if the target area 35 can be perpendicular to the antenna axis 15.

For example, a very advantageous embodiment can be one wherein the relative motion is a lateral motion along the antenna axis with a constant velocity.

However, it will be understood that the above may not be strict requirements or necessities for the relative motion. That is, restrictions on the direction of the relative motion can be relaxed - without introducing too much errors in the determination of the at least one property (see step S5). In other words, the present invention can cope even if restrictions on the direction of the relative motion can be relaxed.

That is, yaw (i.e., pan), pitch (i.e., tilt) and roll motion may also be present, in addition to the lateral motion along the antenna axis 15. For example, this can be the case if oscillations of the DUT are the source of the relative motion. In general, it may be sufficient that the relative motion in step S3 can generate lateral motion along the antenna axis 15 and can maintain, for a portion of the duration of the relative motion, the intersection between the target area 35 and the antenna axis 15. In particular, it can be advantageous that during the relative motion there can be several time instances or intervals during which the target area 35 can be intersected by the antenna axis 14 at unique distances from the transmitter 12 (and/or receiver 14). In between said time instances or intervals the relative motion can comprise any direction.

Again, the relative motion can be configured to render the target area 35 at several distances from the transmitter 12 (and/or from the receiver 14) while intersected by the antenna axis 15. Advantageously, the relative motion can comprise only lateral motion along the antenna axis 15. This can ensure that at all times during the relative motion, the target area 35 can be intersected by the antenna axis 15 and can be at unique distances from the transmitter 12 (and/or receiver 14). However, the relative motion may also comprise roll motion around the antenna axis 15 and may also comprise pan and tilt motion. The present invention can be configured to alleviate the negative effects of the last three motions, in particular, of the last two motions (i.e., pan and tilt).

In addition, it can be preferable that the relative motion can be performed such that a maximum relative displacement between the target area 35 and the measuring device 10 can be at least 1/16^{th} of a wavelength of the measurement signal (discussed below with respect to step S4), preferably at least 1/4^{th} of the wavelength of the measurement signal and even more preferably at least half of the wavelength of the measurement signal. For example, in some preferred embodiments, the maximum relative displacement can be 1 or 2 wavelengths. The maximum relative displacement herein refers to a maximum lateral displacement along the antenna axis 15. That is, it can refer to a displacement between a first position wherein the target area 35 can comprise the smallest distance from the transmitter 12 and a second position wherein the target area 35 can comprise the largest distance from the transmitter 12. The maximum relative displacement can also be referred to as the range of relative motion.

Generally, larger ranges of relative motion can facilitate increasing the accuracy in step S5 (discussed further below). They also provide more robustness against erroneous measurements in step S4. However, they may be disadvantageous as they may require dedicated devices for generating the relative motion (e.g., linear stages and/or robotic arms) and/or it may take longer to perform the relative motion. Additionally, with larger ranges of motion the difference between the respective free-space attenuations of the reflection paths may not be negligible. On the other hand, smaller ranges of relative motion may be advantageous as they may not require dedicated devices to perform the relative motion. For example, oscillations or vibrations of the DUT can be used for this purpose. However, more measurements and more accuracy of said measurements may be required.

As discussed above, the transmission path P0 (see Fig. 2a) depends only the distance between the transmitter 12 and receiver 14 (see Fig. 3a) and does not depend on the position of the target area 35 along the antenna axis 15. Therefore, the transmitted part of the measurement signal can be received with the same phase at the receiver 14. The phase of the transmitted part of the measurement signal can be the reference or the "zero" phase.

On the other hand, reflection paths P1, P1', P2, P2' (see Figs. 2a and 2b) depend on the position of the target area 35 along the antenna axis 15. Thus, the relative motion in step S3 can cause the length of the reflection paths to change. As a result, the reflections "arrive" at the receiver 14 with different phases then the transmitted part of the measurement signal (see Eq. 6). As a result, some reflections will interfere constructively with the transmitted part of the measurement signal and some reflections will interfere destructively with the transmitted part of the measurement signal. This phenomenon can be utilized in step S5 (discussed further below) to determine at least one property of the target area. In particular, this phenomenon can be used to separate the transmitted part of the measurement signal from the reflected part(s) of the measurement signal.

The difference in free space attenuation at distances typically encountered during the measurements between the first and second reflection can be considerable if the measurement can be conducted while the target area 35 can be significantly closer to one of the transmitter 12 and receiver 14. Therefore, it can be a reasonable assumption to model the received electromagnetic wave as predominantly a superposition of the transmission and the first reflection if the target area 35 can be provided in step S2 significantly closer to the transmitter 12. Alternatively, it can be a reasonable assumption to model the received electromagnetic wave as predominantly a superposition of the transmission and the second reflection if the target area 35 can be provided in step S2 significantly closer to the receiver 14 - see also Eq. 7 below.

That is regardless of the distance of the target area 35 to the transmitter 12 and/or to the receiver 14, the transmitted part of measurements remains constant. If the position is slightly varied (e.g., in the range of half a wavelength) the free space attenuation effect on the reflected parts can be negligible. However, the phase shift can be considerable, as the path that reflected waves can follow can be increased (e.g., by up to a wavelength). Measurements taken with positioning differences on this scale can show said phase shift, at least approximately. This can allow to estimate a center point of complex received signal which can indicate the transmitted part and a position-dependent cyclical part which can indicate the first reflection. Other effects, most notably those from the non-dominant reflection, can be suppressed by averaging over different frequencies.

In a step S4 the method can comprise the measuring device 10 performing a plurality of measurements during the relative motion to thereby obtain a measured data set. That is, the method can comprise utilizing the measuring device 10, i.e., utilizing the transmitter 12 and the receiver 14, to perform a plurality of measurements during the relative motion to thereby obtain a measured data set.

Steps S3 and S4 can be carried simultaneously. It may be advantageous to perform step S4 while step S3 is being carried out. This can ensure that at least some of the measurements are obtained for distinct positions of the target area 35 along the antenna axis 15, i.e., for distinct relative positions. It will be understood that although preferable, it may not be necessary for all the measurements to be obtained for distinct relative positions.

Preferably, steps S3 and S4 can be synchronized. For example, they can both start (and/or end) within a fixed delay between each other - which can also be zero, i.e., start (and/or end) simultaneously. Alternatively, the frequency at which the plurality of measurements can be performed in step S4 can depend on the speed of the relative motion in step S3. Synchronizing steps S3 and S4 can increase the likelihood that the measurements are obtained for distinct positions of the target area 35 along the antenna axis 15. Synchronization between steps S3 and S4 can for example be realized by the processing system 20 controlling both the measuring device 10 and the positioning system 40.

Performing a measurement in step S4 can comprise emitting with the transmitter 12 a measurement signal and receiving with the receiver 12 a received portion of the measurement signal - which can comprise transmitted and reflected parts of the measurement signal and potentially other interfering signals and/or measurement errors. Put differently, the received portion of the measurement signal can be modeled as: ${S}_{recv} \left(d\right) = {S}_{tx} + {\sum }_{i = 0}^{N} {S}_{{rx}_{i}} \left(d\right) + ϵ \left(d\right)$ (Eq. 7) wherein d indicates the position of the target area 35 along the antenna axis 15, e.g., d is the distance between the target area 35 and the transmitter 12; *S_{recv}* is the received portion of the measurement signal; *Sₜₓ* is the transmitted portion of the measurement signal; *S_{rxᵢ}* refers to reflections following particular reflections paths; and *ε*(*d*) can refer to errors and/or to other reflection paths not considered in the summation operator.

In general, reflections other than the ones following the first reflection path P1 (referred to as a first reflection) and the second reflection path P2 (referred to as a second reflection) can be so small in magnitude that they can be neglected or considered noise. Therefore, Eq. 7 above can be simplified as: ${S}_{recv} \left(d\right) = {S}_{tx} + {S}_{rx 1} \left(d\right) + {S}_{rx 2} \left(d\right) + ϵ \left(d\right)$ (Eq. 8) wherein Sᵣₓ₁(d) indicates the first reflection for a particular position of the target area 35 along the antenna axis 15 and Sᵣₓ₂(d) indicates the second reflection for a particular position of the target area 35 along the antenna axis. Of these, if the target area 35 can be provided closer to one of the transmitter 12 and receiver 14, one can be larger than the other, i.e., one can be a dominant reflection and the other can be a non-dominant reflection. For example, for the scenario illustrated in Fig. 3b, the first reflection is the dominant one.

The non-dominant reflection can be suppressed by averaging over different frequencies. That is, performing a measurement of the plurality of measurements in step S4 can comprise emitting with the transmitter 12 a plurality of measurement signals, each with a respective and unique frequency and receiving with the receiver 12 a received portion of each measurement signal. The plurality of measurement signals can comprise respective frequencies within a bandwidth of at least 1 GHz and at most 5GHz, preferably at least 2GHz and at most 4 GHz, such as 3 GHz. Said bandwidth can be centered around a center frequency which can be at least 20GHz and at most 160GHz, preferably at least 70 GHz and at most 90 GHz. This can then be repeated a plurality of times for each of the plurality of measurements in step S4.

In general, after each measurement at least one measured data point can be obtained. The measured data point can be indicative of a received portion of a respective measurement signal emitted during that measurement. Each measured data point can indicate the amplitude and phase of the received portion of the respective measurement signal. For example, each measured data point can be a complex number which can indicate phase and amplitude of the received portion of the measurement signal, e.g., in phasor notation.

Put differently, each of the plurality of measurements in step S4 can comprise measuring the amplitude and phase of the received portion of each measurement signal emitted during that measurement and obtaining one or more respective measured data points which can be indicative of the measured amplitude and phase.

The plurality of measured data points obtained via the plurality of measurements can form the measured data set. Thus, the present invention can obtain a respective measured data set, i.e., a plurality of measured data points, for each target area 35 of the DUT.

Preferably, each measurement of the plurality of measurements can be performed for a respective and distinct position of the target area 35 along the antenna axis 35. Moreover, preferably the distinct can be uniformly distributed in the entire range of the relative motion. Further still, more measurements can yield better accuracy.

However, said restrictions may not always be necessary. In particular, due to the relaxed restriction on step S3 - discussed above - some of the measured data points in the measured data set can be erroneous. The present invention can be configured to cope with such erroneous measured data points. For example, some of the measured data points can be obtained while for the same position of the target area 35. Alternatively or additionally, the distinct positions for which a respective measurement is performed can be non-uniformly distributed in the entire range of the relative motion.

The displacement of the target area 35 along the antenna axis 15 between any two consecutive measurements can be referred to as the distance between measurements for the sake of brevity. Its inverse can be referred to as the position resolution.

Therefore, the measured data set can depend on the relative motion in step S3 and on the time pattern at which the plurality of measurements is performed in step S4. The quality of the measured data set, i.e., the accuracy with which the at least one property can be determined based on the measured data set, can depend on step S3 and S4. To illustrated this a description of different examples of performing steps S3 and S4 and the measured data set that can be obtained based thereon is provided. It will be understood that these examples are provided for illustrative purposes only.

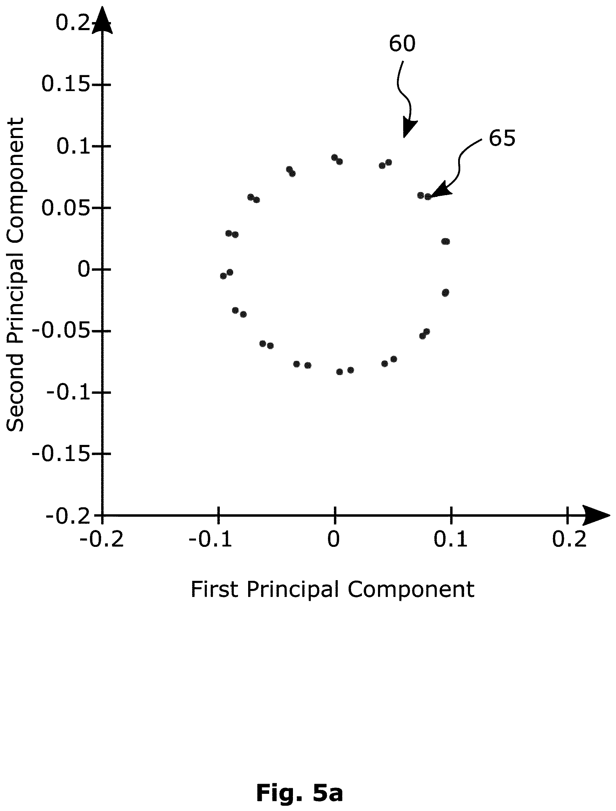

These examples will be discussed with reference to Figs. 5a to 5e, each of which shows respective plots indicative of a respective measured data set obtained during a respective target area measurement. In each plot, the horizontal and vertical axis correspond to a first and second principal component, respectively. The first principal component describes a direction of a line that best fits the measured data points in the measured data set while being orthogonal to the second principal component. In other words, principal component analysis (PCA) is used to generate the plots in Figs. 5a to 5e. However, the skilled person will appreciate that this is merely exemplary and that other analysis could be used. In fact, similar plots can also be obtained by directly plotting the measured data set in a complex plane.

### Example 1

Fig. 5a illustrates a measured data set obtainable via a first target area measurement. The latter can be particularly preferable if accuracy is required, while still being practical to perform. For example, the first target area measurement can be used for end-of line testing.

In this example, for each measurement the measurement signal can comprise a center frequency of 76.5 GHz and therefore a wavelength of approximately 4mm.

The relative motion in step S3 is a lateral motion along the antenna axis 15 with a speed of 4 mm/second and lasts for 1 second. Thus, the range of the relative motion, in this example, is 4 mm or approximately 1 wavelength.

The plurality of measurements in step S4 are performed with a frequency of 30 measurements per second. Thus, 30 measurements are performed in total and the measured data set comprises 30 measured data points. Fig. 5a thereby shows 30 data points.

As the speed of the relative motion and the frequency of the measurements are constant, the displacement of the target area 35 along the antenna axis 15 between any two consecutive measurements is approximately 130 micrometers, corresponding to a phase difference of approximately 12° (which can be calculated using Eq. 6). That is, the position resolution in this example results in a phase difference of 12°.

As it can be noticed, the measured data points are arranged in a circular shape. This is due to the fact that interference from reflections can be constructive or destructive, thereby forming the circular pattern. More particularly, if reflections could be eliminated, then all the measured data points would be positioned close to or at the center of the plot - said center corresponding to the transmitted part and measurement noise (see Eq. 7). However, due to interference from reflections the measurement data points are "pushed" away from the center of the plot.

Moreover, since measurements are taken over a full wavelength, the measurement data point go around the center of the plot two times. Thus, every measurement comprises a "duplicate" which can offer robustness against missing or erroneous measurements. The latter can happen due to hardware lagging, for example.

Further still, the measurement data points are uniformly distributed along the circle which can be advantageous for determining the at least one property with a high accuracy.

### Example 2

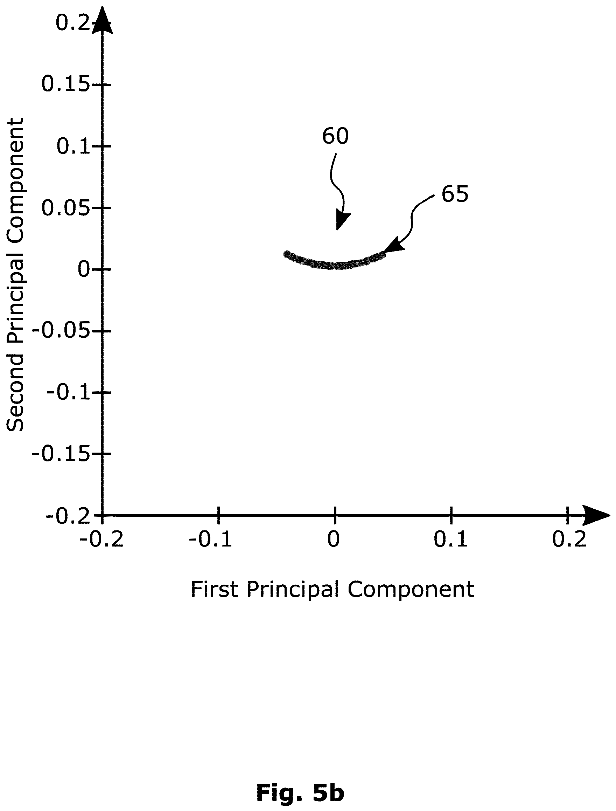

Fig. 5b illustrates a measured data set obtainable via a second target area measurement. The latter can be particularly preferable if no dedicated device for performing the relative motion is present, but rather vibrations of the object are used as a source of the relative motion.

In this example, for each measurement the measurement signal can comprise a center frequency of 76.5 GHz and therefore a wavelength of approximately 4mm.

The range of the relative motion in step S3 can be approximately 1/16^{th} of the wavelength.

The plurality of measurements in step S4 are performed during a total time of 3 seconds and during which 68 measurements are performed. Fig. 5a thereby shows 68 data points, which are closely positioned to each other due to the small range of the relative motion.

In this scenario only the frequency of the measurements is constant. However, the speed of the relative motion is not constant - as the relative motion can be due to vibrations of the DUT. Therefore, the position resolution is not constant or uniform in this case. The average position resolution results in a phase difference of 0.33°.

As it can be noticed, the measured data points are arranged in a part-circular shape. Moreover, since measurements are taken over a 1/16^{th} of a wavelength, the measurement data points form an 8^{th} of a circle.

Although the measurement data points are distributed only along an 8^{th} of a circle, they comprise a very high position resolution. This way they can form a well-defined line which can be advantageous for determining the at least one property with reasonable accuracy.

### Example 3

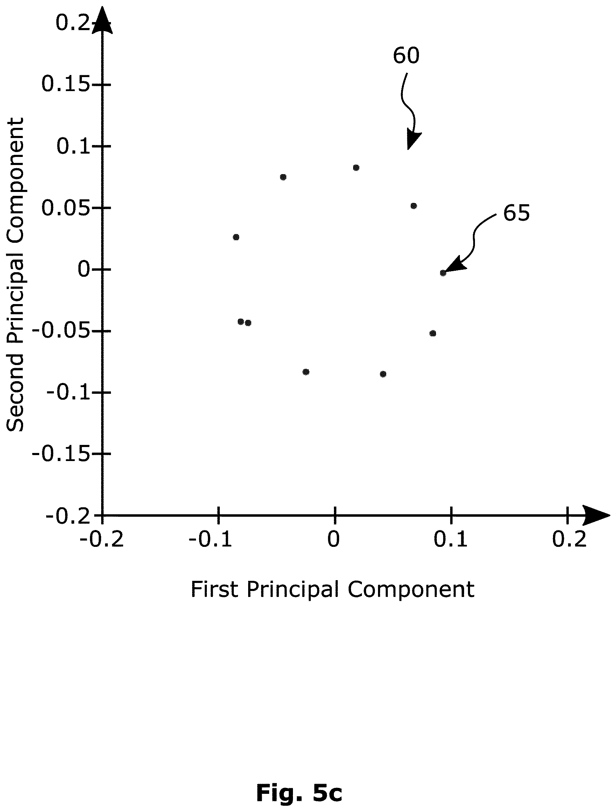

Fig. 5c illustrates a measured data set obtainable via a third target area measurement. The latter can be particularly preferable if fast target area measurement is required.

In this example, for each measurement the measurement signal can comprise a center frequency of 76.5 GHz and therefore a wavelength of approximately 4mm

The relative motion in step S3 is a lateral motion along the antenna axis 15 with a speed of 4 mm/second and lasts for 0.5 second. Thus, the range of the relative motion, in this example, is 2 mm or approximately half a wavelength.

The plurality of measurements in step S4 are performed with a frequency of 20 measurements per second. Thus, 10 measurements are performed in total and the measured data set comprises 10 measured data points. Fig. 5a thereby shows 10 data points.

As the speed of the relative motion and the frequency of the measurements are constant, the distance between measurements is approximately 200 micrometers, corresponding to a phase difference of approximately 18° (which can be calculated using Eq. 6).

As it can be noticed, the measured data points are arranged in a single circular shape. Since measurements are taken over half a wavelength, the measurement data points form a single circle. In this case, less robustness to lost measurements is provided, compared to the first example.

Moreover, the fact that measurement data points are arranged over a full circle may allow for smaller position resolutions, such that the at least one property can be determined with accuracy.

### Example 4

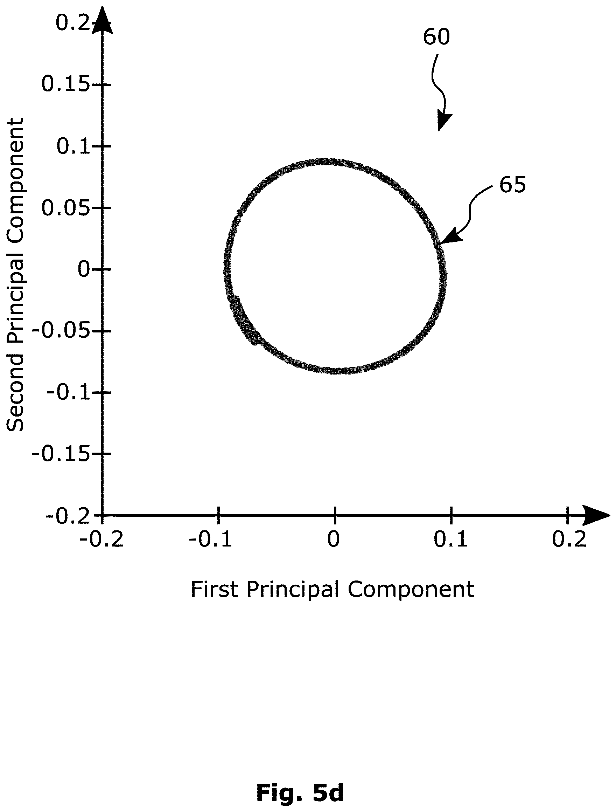

Fig. 5d illustrates a measured data set obtainable via a fourth target area measurement. The latter can be a precise measurement in a laboratory environment. For example, the fourth target area measurement can be used to measure a reference sample and/or to estimate higher-order reflections (see Fig. 3c).

In this example, for each measurement the measurement signal can comprise a center frequency of 76.5 GHz and therefore a wavelength of approximately 4mm.

The relative motion in step S3 can be performed for 20 seconds over half a wavelength and a total of 540 measurement can be obtained in step S4.

Thus, the range of the relative motion can be half a wavelength and the distance between measurements can be approximately 3.6 micrometers, corresponding to a phase difference of approximately 0.33° (which can be calculated using Eq. 6).

As it can be noticed, the measured data points are arranged in a circular shape and comprise a very high position resolution. In this case, a very high accuracy for determining the at least one property can be achieved.

### Example 5

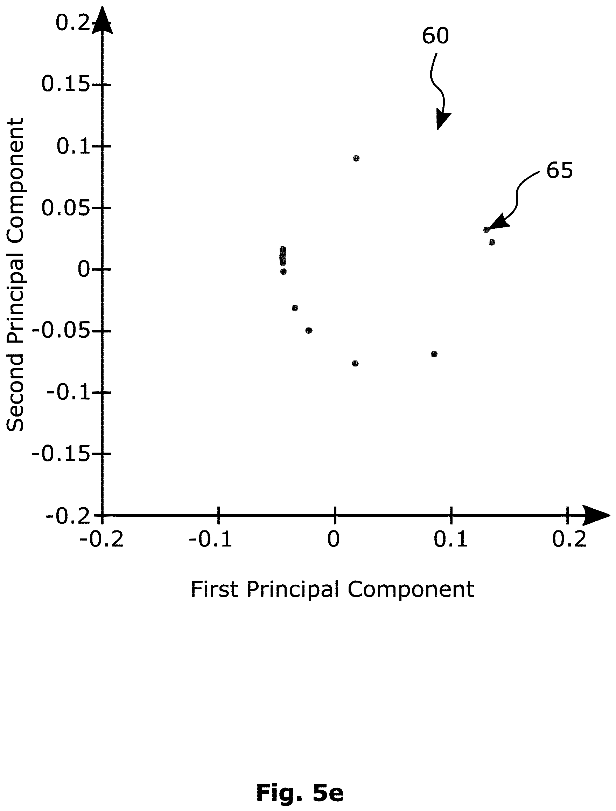

Fig. 5e illustrates a measured data set obtainable via a fifth target area measurement. This scenario demonstrates that the present invention does not require exact or regularly spaced positions of the target area 35 along the antenna axis 15 for the measurements.

In this example, for each measurement the measurement signal can comprise a center frequency of 76.5 GHz and therefore a wavelength of approximately 4mm.

The relative motion in step S3 in this example is a lateral motion along the antenna axis with acceleration. The range of the relative motion can be approximately 0.78 wavelengths. The position resolution ranges from 0 to 1019 micrometers. Moreover, in total 15 measurements are obtained and only 14 of them are taken at distinct positions.

As it can be noticed, the measured data points are arranged in a non-uniform manner around a circular shape. Due to the accelerating relative motion, they initially comprise a very high position resolution (in fact two of the measurements are taken at indistinguishable positions) and then as the motions speeds up the position resolution reduces significantly.

The preceding examples, illustrate working solutions of the present invention. This includes embodiments wherein the measurements are performed with a high range of relative motion, but low position resolution (Examples 1 and 3); with a low range of relative motion, but high position resolution (Example 2); with a high range of relative motion and high position resolution (Example 4); and/or with a moderate range of relative motion and non-uniform position resolution (Example 5).

Referring back to Fig. 4, in a step S5 the method comprises determining, based on the measured data set, the at least one property of the target area 35 of the DUT. Step S5 can be carried out by the processing system 20.

Step S5 can comprise estimating a separation of the transmitted part from the reflected part of the measurement signal. Alternatively or additionally, step S5 can comprise determining a reflection coefficient of the target area 35. Alternatively or additionally, step S5 can comprise determining a transmission coefficient of the target area 35. Alternatively or additionally, step S5 can comprise determining a reflection coefficient of the target area 35 from two sides 32, 34. Alternatively or additionally, step S5 can comprise determining a quality metric of the measured data set. Alternatively or additionally, step S5 can comprise estimating movement of the target area. For example, step S5 can comprise determining a distance between the transmitter 12 and the target area 35 and/or determining a distance between the receiver 14 and the target area 35. Therefore, "determining at least one property of the target area" shall encompass all of the above individually or in combination.

As discussed above, the received portion of the measurement signal can comprise a fixed part and a position dependent part. The fixed part can correspond to the transmitted part of the measurement signal. The transmitted part can be fixed as its path may only depend on the distance between the transmitter 12 and receiver 14 - as illustrated in Fig. 3b. The position dependent part can correspond to the reflected part of the measurement signal. The reflected part can be position dependent as its path(s) can depend on the position of the target area 35 along the antenna axis 15. Moreover, the position dependent part can be cyclical (see Figs. 5a to 5e) and can interchangeably be referred to as a cyclical part. The latter is due to the fact that the phase changes cyclically with respect to the path distance (see Eq. 6).

Based on the above rationale, step S5 comprises determining a fixed part and a cyclical part on the measured data set. Put differently, step S5 can comprise decomposing the measured data set into a fixed part and a cyclical part. For example, step S5 can comprise fitting a circle into the measured data set. The fixed part or the transmission part of the measurement signal can be determined based on the center of the fitted circle. The cyclical part or the reflection part of the measurement signal can be determined based on the radius of the fitted circle. Based thereon, a transmission coefficient and/or a reflection coefficient can be determined by referencing against a reference target with known transmission coefficient and/or a reflection coefficient.

Moreover, the fitness of the fitted circle on the measurement data can be used to estimate a quality of the measured data set.

After decomposing the measured data set into a fixed part and a cyclical part it can be advantageous to account for the transmission loss of the reflection path because reflected waves are transmitted through the target area 35 at least once before being received by the receiver 14. Additionally, it can be advantageous to estimate the reflectivity of other surfaces in the reflection path (e.g., reflectivity of the reflecting surface 17) This can be done for e.g., by referencing against a reference sample with known properties.

Referencing can be the process of taking measurements of reference samples with (approximately) known properties or of reference samples whose properties are at least known to be in an acceptable range to compare subsequent measurements with them.

Initial Referencing can be done in order to estimate the reflectivity of the reflective component 17 and/or of the transmitter 12 and/or of the receiver 14. Additionally, referencing on a regular basis can be done to account for at least some of the following effects and improve parameter estimation accuracy: free space attenuation; variations in the reflectivity of the reflective component 17 and/or of the transmitter 12 and/or of the receiver 14 which can occur for example due to temperature variations; and variations in the angle between normal vector of the target area and the antenna axis.

Free space attenuation can be accounted for by positioning a reference sample at a known distance or, preferably, at the same distance as the subsequent target measurements.

Variations in the reflectivity of the reflective component 17 should preferably be small. This can for example be achieved by actively regulating the temperature of the components of the measurement device 10 and/or of the environment wherein the measurement device 10 may be operating or positioned. Nonetheless, referencing can account for such changes.

Slight variations in the angle between normal vector of the target area 35 and the antenna axis 15 can arise for example when it can be challenging to position the target area 35 in such a way that the normal vector faces towards the transmitter 12 and/or is parallel with the antenna axis 15. This can, for example, be due to the geometry of the DUT. However, as long as a large enough proportion of an electromagnetic wave can be reflected from the target area 35 towards the reflecting component 17 of the measuring device 10, reference measurements against a sample with known properties can still provide measurement results that can be used to evaluate whether the reflectivity of the target area is at a certain range (e.g., 2 decibel range) around a "golden sample" with optimal properties. It can be advantageous that reference measurements and target area measurements can be performed with the same hardware setup and/or positioning scheme.

Further still, the circular part can be used to estimate movements of the target area. A position difference of half a wavelength can result in a different reflection path length of one wavelength which can result in the measured data set arranged in exactly one circle (see Example 3). In other words, based on the arrangement of the measured data set, the range of motion can be determined. For example, from the arrangement of the measured data set in Fig. 5a, a motion of 2 wavelengths can be determined, form Fig. 5b a motion of 1/16^{th} of a wavelength can be determined and so on. In embodiments wherein step S5 comprises estimating movements of the target area 35, step S3 may not be performed. Alternatively, estimating movements of the target area 35 can be used to obtain information about the relative motion in step S3 (e.g., to obtain the range of the relative motion).

Alternatively or additionally, the presence of a cyclical part can be used to determine whether the relative motion is present or not, i.e., whether the target area 35 is in motion with respect to the measuring device 10. In such embodiments, step S3 may not be performed. Alternatively, determine whether the relative motion is present or not can be used to determine whether step S3 was performed.

Below an exemplary signal processing technique for determining the at least one property of the radome is discussed. The skilled person will appreciate that other techniques can be used as well. For example, other techniques may include, linear methods, such as, singular value decomposition (SVD). In general, different dimensionality reduction technique can be used.

In some embodiments, in step S4 m measurement can be performed, wherein each of the m measurements can be performed by emitting n measurement signals each with a respective frequency. Thus, m x n measured data points can be obtained in step S4, which can form the elements of the complex-valued matrix with m rows and n columns. Each row can correspond to a particular position of the target area 35 along the antenna axis 15 and each column can correspond to a particular frequency of the measurement signal. From this, using a decomposition into real and imaginary numbers, we can form a real measurement matrix with m rows and 2n columns.

The latter can be centered by subtracting the column-wise mean from each row. A two-dimensional embedding on the measured data set can be determined. For this, principal component analysis can be used to identify two principal components. The skilled person will appreciate that the principal components of a collection of points in a real coordinate space are a sequence of unit vectors, where the i-th vector is the direction of a line that best fits the data while being orthogonal to the other vectors. A more detailed description of this technique is discussed in detail in the Wikipedia article which can be accessed via https://en.wikipedia.org/wiki/Principal component analysis.

The measured data points can be projected on the two-dimensional plane defined by the first two principal components. In this plane a circle can be fitted by minimizing the root mean squared error between the projected measured data points and their circle projections.

The center point of the circle can correspond to the transmission part of the signal, while the cyclical part - i.e., the projected points minus the center point - can correspond to the reflected part. Moreover, one cycle can correspond approximately to a position difference of half a wavelength.

Exemplary processing steps that can be performed in step S5 can comprise:
1. Transform the measured data set to a processed measured data set using a dimensionality reduction technique, e.g., PCA and/or SVD.
2. Estimate a decomposition into a cyclical part and a fixed part, e.g., using a least squares circle estimation on the processed measured data set.
3. The cyclical part consists of an amplitude factor which is approximately identical for all measurement data points and an angular part which is different for any two measurement data points obtained for distinct relative positions.
4. Based on the decomposition, estimate reflection by referencing against a reference sample and by compensating for the transmission loss of the reflected wave travelling through the target area 35.

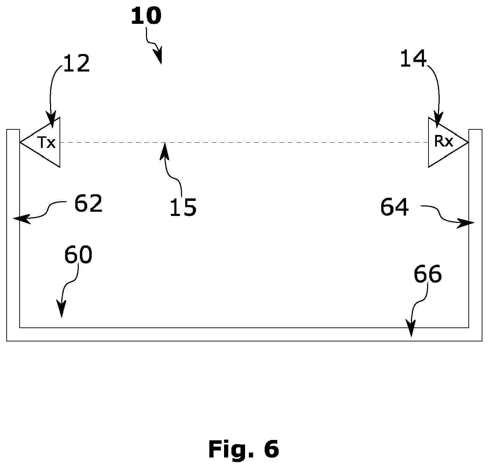

Fig. 6 depicts an embodiment of the measuring device 10, comprising a clamp structure 60 (also referred to as a clamp 60). The clamp 60 can comprise a base frame 66. On the base frame 66, two antenna mounts 62, 64 can be attached. More particularly, on one of the ends of the base frame 66, a transmitter mount of the clamp 62 can be attached and on the other end, a receiver mount of the clamp 64 can be attached. Hence, the transmitter mount of the clamp 62 and the receiver mount of the clamp 64 and the base frame 66 can create a U-shaped structure or a "clamp" shaped structure.

In some embodiments, the clamp 60 can be manufactured by attaching or fixating the transmitter mount of the clamp 62 and the receiver mount of the clamp 64 on two opposing sides of the base frame 66. Alternatively, the clamp 60 can be manufactured as a single part - i.e., without mounting or assembling or attaching smaller parts together to form the clamp 60.

The clamp 60 can provide a stable structure for the transmitter 12 and receiver 14 to be mounted. As discussed, it can be advantageous to have the transmitter 12 and the receiver 14 aligned with each-other such that most of the radiated electromagnetic waves emitted by the transmitter 12 can be received by the receiver 14. The shape of the clamp structure 60 can facilitate this alignment. Further, it can be advantageous that the distance between the two antennas 10 to be kept constant. The clamp structure 60, more particularly the base frame 66, can facilitate keeping the distance between the transmitter 12 and receiver 14 constant.

The clamp structure 60 can further facilitate the handling of the transmitter 12 and the receiver 14, without changing the relative position between the transmitter 12 and the receiver 14.

The clamp structure 60 can also be configured to allow the fixation of the antenna mounts 62 and 64 on different parts of the base frame 66. This can allow the adjustment of the relative position between the two antenna mounts 62 and 64, such as, the adjustment of the distance between the antenna mounts 62 and 64. For example, the base frame 66 can comprise multiple attaching elements (not shown), wherein the antenna mounts 62 and 64 can be attaching to the base frame 66.Whenever a relative term, such as "about", "substantially" or "approximately" is used in this specification, such a term should also be construed to also include the exact term. That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Y1), ..., followed by step (Z). Corresponding considerations apply when terms like "after" or "before" are used.

While in the above, a preferred embodiment has been described with reference to the accompanying drawings, the skilled person will understand that this embodiment was provided for illustrative purpose only and should by no means be construed to limit the scope of the present invention, which is defined by the claims.

## Claims

1. A method of measuring a target area (35) of a device under test (30), comprising
(S1) providing a measuring device (10) comprising a transmitter (12) configured to emit electromagnetic waves along an antenna axis (15) and a receiver (14) configured to receive electromagnetic waves emitted by the transmitter (12);
(S2) arranging the measuring device (10) and/or the device under test (30) such that the antenna axis (15) intersects the target area (35);
(S3) generating a relative motion between the measuring device (10) and the target area (35);
(S4) the measuring device (10) performing a plurality of measurements during the relative motion to thereby obtain a measured data set;
(S5) determining based on the measured data set at least one property of the target area;
wherein step (S5) comprises detecting on the measured data set a fixed part and a position-dependent part;
wherein the position-dependent part varies; and
wherein variation of the position-dependent part is caused by the relative motion in step (S3).

2. The method according to the preceding claim, wherein the position-dependent part varies cyclically.

3. The method according to any of the preceding claims, wherein the measurements are performed while the target area is positioned at an arbitrary distance from the transmitter and/or at an arbitrary distance from the receiver.

4. The method according to any of the preceding claims, wherein step (S5) comprises determining at least one transmission property of the target area (35) based on the fixed part.

5. The method according to any of the preceding claims, wherein step (S5) comprises determining at least one reflection property of the target area (35) based on the position-dependent part.

6. The method according to any of the preceding claims, wherein detecting a fixed part and a position-dependent part comprises
transforming the measured data set to a processed data set,
fitting a circle on the processed data set,
determining the fixed part based on the center of the circle and
determining the position-dependent part based on a radius of the circle.

7. The method according to any of the preceding claims wherein the device under test (30) is a radome configured to cover at least in part a radar and
wherein the transmitter (12) is configured to emit electromagnetic waves with a frequency of at least 20 GHz and at most 160 GHz, such as, at least 70 GHz and at most 90 GHz and
wherein the receiver (14) is configured to receive electromagnetic waves with a frequency of at least 20 GHz and at most 160 GHz, such as, at least 70 GHz and at most 90 GHz.

8. The method according to any of the preceding claims, wherein step (S3) comprises moving the target area (35) along the antenna axis (15) and/or moving the measuring device (10) along the antenna axis (15).

9. The method according to any of the preceding claims, wherein step (S3) comprises generating vibrations of the target area (35).

10. The method according to any of the preceding claims, wherein step (S3) comprises generating a plurality of distinct relative positions between the measuring device (10) and the target area (35) along the antenna axis (15),
wherein each distinct relative position is **characterised by** a respective distance between the target area (35) and the transmitter (12) along the antenna axis (15) and/or by a respective distance between the target area (35) and the receiver (14) along the antenna axis (15).

11. The method according to any of the preceding claims, wherein step (S4) comprises performing each of the measurements by
emitting via the transmitter (12) at least one measurement signal along the antenna axis (15);
receiving via the receiver (14) at least one received portion, wherein each of the at least one received portion corresponds to a respective one of the at least one measurement signal,
wherein receiving via the receiver (14) at least one received portion, comprises measuring an amplitude and a phase of the at least one received portion.

12. A measuring device (10) for measuring a target area (35) of a device under test (30), wherein the measuring device (10) comprises
a transmitter (12) configured to emit electromagnetic waves along an antenna axis (15) and a receiver (14) configured to receive electromagnetic waves emitted by the transmitter (12); and wherein the measuring device (10) is configured to allow arranging the measuring device (10) and/or the device under test (30) such that the antenna axis (15) intersects the target area;
perform a plurality of measurements during a relative motion between the measuring device (10) and the target area (35) to thereby obtain a measured data set;
wherein the measuring device (10) further comprises a processing system (20);
wherein the processing system (20) is configured to determine based on the measured data set at least one property of the target area (35)
wherein determining based on the measured data set at least one property of the target area (35) comprises detecting on the measured data set a fixed part and a position-dependent part;
wherein the position-dependent part varies; and
wherein variation of the position-dependent part is caused by the relative motion.

13. The measuring device (10) according to the preceding claim, wherein the measuring device (10) is configured such that the transmitter (12) and the receiver (14) are provided at a fixed distance from each-other.

14. A measuring system (1) for measuring a target area (35) of a device under test (30), wherein the measuring system (1) comprises
a measuring device (10) according to any of the preceding claims 12 to 13; and
a positioning system (40) configured to at least one of
arrange the measuring device (10) and/or the device under test (30) such that an antenna axis (15) intersects the target area (15) and
generate a relative motion between the measuring device (10) and the target area (35);
wherein the measuring system (1) is configured to carry out the method according to any of the preceding claims 1 to 11.

15. The measuring system (1) according to the preceding claim, wherein the measuring system (1) further comprises a processing system (20) configured to determine based on the measured data set at least one property of the target area (35).

## Patentansprüche

1. Verfahren zum Messen eines Zielbereichs (35) einer zu testenden Vorrichtung (30), umfassend
(S1) Bereitstellen einer Messvorrichtung (10), die einen Sender (12), der dazu eingerichtet ist, elektromagnetische Wellen entlang einer Antennenachse (15) auszusenden, und einen Empfänger (14) umfasst, der dazu eingerichtet ist, von dem Sender (12) ausgesendete elektromagnetische Wellen zu empfangen;
(S2) Anordnen der Messvorrichtung (10) und/oder der zu testenden Vorrichtung (30) derart, dass die Antennenachse (15) den Zielbereich (35) schneidet;
(S3) Erzeugen einer Relativbewegung zwischen der Messvorrichtung (10) und dem Zielbereich (35);
(S4) Durchführen einer Vielzahl von Messungen durch die Messvorrichtung (10) während der Relativbewegung, um dadurch einen Messdatensatz zu erhalten;
(S5) Bestimmen mindestens einer Eigenschaft des Zielbereichs basierend auf dem Messdatensatz;
wobei Schritt (S5) ein Erfassen eines festen Anteils und eines positionsabhängigen Anteils in dem Messdatensatz umfasst;
wobei der positionsabhängige Anteil variiert; und
wobei eine Variation des positionsabhängigen Anteils durch die Relativbewegung in Schritt (S3) verursacht wird.

2. Verfahren nach dem vorhergehenden Anspruch, wobei der positionsabhängige Anteil zyklisch variiert.

3. Verfahren nach einem der vorhergehenden Ansprüche, wobei die Messungen durchgeführt werden, während der Zielbereich in einem beliebigen Abstand von dem Sender und/oder in einem beliebigen Abstand von dem Empfänger positioniert ist.

4. Verfahren nach einem der vorhergehenden Ansprüche, wobei Schritt (S5) ein Bestimmen mindestens einer Transmissionseigenschaft des Zielbereichs (35) basierend auf dem festen Anteil umfasst.

5. Verfahren nach einem der vorhergehenden Ansprüche, wobei Schritt (S5) ein Bestimmen mindestens einer Reflexionseigenschaft des Zielbereichs (35) basierend auf dem positionsabhängigen Anteil umfasst.

6. Verfahren nach einem der vorhergehenden Ansprüche, wobei das Erfassen eines festen Anteils und eines positionsabhängigen Anteils umfasst:
Transformieren des Messdatensatzes in einen verarbeiteten Datensatz,
Anpassen eines Kreises an den verarbeiteten Datensatz,
Bestimmen des festen Anteils basierend auf dem Mittelpunkt des Kreises und
Bestimmen des positionsabhängigen Anteils basierend auf einem Radius des Kreises.

7. Verfahren nach einem der vorhergehenden Ansprüche, wobei die zu testende Vorrichtung (30) ein Radom ist, das dazu eingerichtet ist, ein Radar zumindest teilweise abzudecken, und
wobei der Sender (12) dazu eingerichtet ist, elektromagnetische Wellen mit einer Frequenz von mindestens 20 GHz und höchstens 160 GHz, wie etwa mindestens 70 GHz und höchstens 90 GHz, auszusenden, und
wobei der Empfänger (14) dazu eingerichtet ist, elektromagnetische Wellen mit einer Frequenz von mindestens 20 GHz und höchstens 160 GHz, wie etwa mindestens 70 GHz und höchstens 90 GHz, zu empfangen.

8. Verfahren nach einem der vorhergehenden Ansprüche, wobei Schritt (S3) ein Bewegen des Zielbereichs (35) entlang der Antennenachse (15) und/oder ein Bewegen der Messvorrichtung (10) entlang der Antennenachse (15) umfasst.

9. Verfahren nach einem der vorhergehenden Ansprüche, wobei Schritt (S3) ein Erzeugen von Schwingungen des Zielbereichs (35) umfasst.

10. Verfahren nach einem der vorhergehenden Ansprüche, wobei Schritt (S3) ein Erzeugen einer Vielzahl unterschiedlicher Relativpositionen zwischen der Messvorrichtung (10) und dem Zielbereich (35) entlang der Antennenachse (15) umfasst,
wobei jede unterschiedliche Relativposition durch einen jeweiligen Abstand zwischen dem Zielbereich (35) und dem Sender (12) entlang der Antennenachse (15) und/oder durch einen jeweiligen Abstand zwischen dem Zielbereich (35) und dem Empfänger (14) entlang der Antennenachse (15) gekennzeichnet ist.

11. Verfahren nach einem der vorhergehenden Ansprüche, wobei Schritt (S4) ein Durchführen jeder der Messungen umfasst durch
Aussenden mindestens eines Messsignals entlang der Antennenachse (15) über den Sender (12);
Empfangen mindestens eines empfangenen Anteils über den Empfänger (14), wobei jeder des mindestens einen empfangenen Anteils einem jeweiligen des mindestens einen Messsignals entspricht,
wobei das Empfangen mindestens eines empfangenen Anteils über den Empfänger (14) ein Messen einer Amplitude und einer Phase des mindestens einen empfangenen Anteils umfasst.

12. Messvorrichtung (10) zum Messen eines Zielbereichs (35) einer zu testenden Vorrichtung (30), wobei die Messvorrichtung (10) umfasst:
einen Sender (12), der dazu eingerichtet ist, elektromagnetische Wellen entlang einer Antennenachse (15) auszusenden, und einen Empfänger (14), der dazu eingerichtet ist, von dem Sender (12) ausgesendete elektromagnetische Wellen zu empfangen; und wobei die Messvorrichtung (10) dazu eingerichtet ist,
ein Anordnen der Messvorrichtung (10) und/oder der zu testenden Vorrichtung (30) derart zu ermöglichen, dass die Antennenachse (15) den Zielbereich schneidet;
während einer Relativbewegung zwischen der Messvorrichtung (10) und dem Zielbereich (35) eine Vielzahl von Messungen durchzuführen, um dadurch einen Messdatensatz zu erhalten;
wobei die Messvorrichtung (10) ferner ein Verarbeitungssystem (20) umfasst;
wobei das Verarbeitungssystem (20) dazu eingerichtet ist, basierend auf dem Messdatensatz mindestens eine Eigenschaft des Zielbereichs (35) zu bestimmen,
wobei das Bestimmen mindestens einer Eigenschaft des Zielbereichs (35) basierend auf dem Messdatensatz ein Erfassen eines festen Anteils und eines positionsabhängigen Anteils in dem Messdatensatz umfasst;
wobei der positionsabhängige Anteil variiert; und
wobei eine Variation des positionsabhängigen Anteils durch die Relativbewegung verursacht wird.

13. Messvorrichtung (10) nach dem vorhergehenden Anspruch, wobei die Messvorrichtung (10) derart eingerichtet ist, dass der Sender (12) und der Empfänger (14) in einem festen Abstand zueinander vorgesehen sind.

14. Messsystem (1) zum Messen eines Zielbereichs (35) einer zu testenden Vorrichtung (30), wobei das Messsystem (1) umfasst:
eine Messvorrichtung (10) nach einem der vorhergehenden Ansprüche 12 bis 13; und
ein Positioniersystem (40), das dazu eingerichtet ist, mindestens eines von Folgendem auszuführen:
die Messvorrichtung (10) und/oder die zu testende Vorrichtung (30) derart anzuordnen, dass eine Antennenachse (15) den Zielbereich (15) schneidet, und
eine Relativbewegung zwischen der Messvorrichtung (10) und dem Zielbereich (35) zu erzeugen;
wobei das Messsystem (1) dazu eingerichtet ist, das Verfahren nach einem der vorhergehenden Ansprüche 1 bis 11 auszuführen.

15. Messsystem (1) nach dem vorhergehenden Anspruch, wobei das Messsystem (1) ferner ein Verarbeitungssystem (20) umfasst, das dazu eingerichtet ist, basierend auf dem Messdatensatz mindestens eine Eigenschaft des Zielbereichs (35) zu bestimmen.

## Revendications

1. Procédé de mesure d'une zone cible (35) d'un dispositif à l'essai (30), comprenant
(S1) la fourniture d'un dispositif de mesure (10) comprenant un émetteur (12) configuré pour émettre des ondes électromagnétiques le long d'un axe d'antenne (15) et un récepteur (14) configuré pour recevoir des ondes électromagnétiques émises par l'émetteur (12) ;
(S2) l'agencement du dispositif de mesure (10) et/ou du dispositif à l'essai (30) de sorte que l'axe d'antenne (15) coupe la zone cible (35) ;
(S3) la génération d'un mouvement relatif entre le dispositif de mesure (10) et la zone cible (35) ;
(S4) la réalisation, par le dispositif de mesure (10), d'une pluralité de mesures pendant le mouvement relatif pour obtenir ainsi un ensemble de données mesurées ;
(S5) la détermination, sur la base de l'ensemble de données mesurées, d'au moins une propriété de la zone cible ;
dans lequel l'étape (S5) comprend la détection, sur l'ensemble de données mesurées, d'une partie fixe et d'une partie dépendant de la position ;
dans lequel la partie dépendant de la position varie ; et
dans lequel la variation de la partie dépendant de la position est causée par le mouvement relatif à l'étape (S3).

2. Procédé selon la revendication précédente, dans lequel la partie dépendant de la position varie de manière cyclique.

3. Procédé selon l'une quelconque des revendications précédentes, dans lequel les mesures sont réalisées pendant que la zone cible est positionnée à une distance arbitraire de l'émetteur et/ou à une distance arbitraire du récepteur.

4. Procédé selon l'une quelconque des revendications précédentes, dans lequel l'étape (S5) comprend la détermination d'au moins une propriété de transmission de la zone cible (35) sur la base de la partie fixe.

5. Procédé selon l'une quelconque des revendications précédentes, dans lequel l'étape (S5) comprend la détermination d'au moins une propriété de réflexion de la zone cible (35) sur la base de la partie dépendant de la position.

6. Procédé selon l'une quelconque des revendications précédentes, dans lequel la détection d'une partie fixe et d'une partie dépendant de la position comprend
la transformation de l'ensemble de données mesurées en un ensemble de données traitées,
l'ajustement d'un cercle sur l'ensemble de données traitées,
la détermination de la partie fixe sur la base du centre du cercle et
la détermination de la partie dépendant de la position sur la base d'un rayon du cercle.

7. Procédé selon l'une quelconque des revendications précédentes, dans lequel le dispositif à l'essai (30) est un radôme configuré pour couvrir au moins en partie un radar et
dans lequel l'émetteur (12) est configuré pour émettre des ondes électromagnétiques à une fréquence d'au moins 20 GHz et d'au plus 160 GHz, telle que d'au moins 70 GHz et d'au plus 90 GHz, et
dans lequel le récepteur (14) est configuré pour recevoir des ondes électromagnétiques à une fréquence d'au moins 20 GHz et d'au plus 160 GHz, telle que d'au moins 70 GHz et d'au plus 90 GHz.

8. Procédé selon l'une quelconque des revendications précédentes, dans lequel l'étape (S3) comprend le déplacement de la zone cible (35) le long de l'axe d'antenne (15) et/ou le déplacement du dispositif de mesure (10) le long de l'axe d'antenne (15).

9. Procédé selon l'une quelconque des revendications précédentes, dans lequel l'étape (S3) comprend la génération de vibrations de la zone cible (35).

10. Procédé selon l'une quelconque des revendications précédentes, dans lequel l'étape (S3) comprend la génération d'une pluralité de positions relatives distinctes entre le dispositif de mesure (10) et la zone cible (35) le long de l'axe d'antenne (15),
dans lequel chaque position relative distincte est **caractérisée par** une distance respective entre la zone cible (35) et l'émetteur (12) le long de l'axe d'antenne (15) et/ou par une distance respective entre la zone cible (35) et le récepteur (14) le long de l'axe d'antenne (15).

11. Procédé selon l'une quelconque des revendications précédentes, dans lequel l'étape (S4) comprend la réalisation de chacune des mesures par
l'émission, par l'intermédiaire de l'émetteur (12), d'au moins un signal de mesure le long de l'axe d'antenne (15) ;
la réception, par l'intermédiaire du récepteur (14), d'au moins une partie reçue, dans lequel chacune de l'au moins une partie reçue correspond à un signal respectif de l'au moins un signal de mesure,
dans lequel la réception, par l'intermédiaire du récepteur (14), d'au moins une partie reçue comprend la mesure d'une amplitude et d'une phase de l'au moins une partie reçue.

12. Dispositif de mesure (10) pour mesurer une zone cible (35) d'un dispositif à l'essai (30), dans lequel le dispositif de mesure (10) comprend
un émetteur (12) configuré pour émettre des ondes électromagnétiques le long d'un axe d'antenne (15) et un récepteur (14) configuré pour recevoir des ondes électromagnétiques émises par l'émetteur (12) ; et dans lequel le dispositif de mesure (10) est configuré pour
permettre l'agencement du dispositif de mesure (10) et/ou du dispositif à l'essai (30) de sorte que l'axe d'antenne (15) coupe la zone cible ;
réaliser une pluralité de mesures pendant un mouvement relatif entre le dispositif de mesure (10) et la zone cible (35) pour obtenir ainsi un ensemble de données mesurées ;
dans lequel le dispositif de mesure (10) comprend en outre un système de traitement (20) ;
dans lequel le système de traitement (20) est configuré pour déterminer, sur la base de l'ensemble de données mesurées, au moins une propriété de la zone cible (35),
dans lequel la détermination, sur la base de l'ensemble de données mesurées, d'au moins une propriété de la zone cible (35) comprend la détection, sur l'ensemble de données mesurées, d'une partie fixe et d'une partie dépendant de la position ;
dans lequel la partie dépendant de la position varie ; et
dans lequel la variation de la partie dépendant de la position est causée par le mouvement relatif.

13. Dispositif de mesure (10) selon la revendication précédente, dans lequel le dispositif de mesure (10) est configuré de sorte que l'émetteur (12) et le récepteur (14) sont disposés à une distance fixe l'un de l'autre.

14. Système de mesure (1) pour mesurer une zone cible (35) d'un dispositif à l'essai (30), dans lequel le système de mesure (1) comprend
un dispositif de mesure (10) selon l'une quelconque des revendications précédentes 12 à 13 ; et
un système de positionnement (40) configuré pour au moins l'une des opérations suivantes :
agencer le dispositif de mesure (10) et/ou le dispositif à l'essai (30) de sorte qu'un axe d'antenne (15) coupe la zone cible (15) et
générer un mouvement relatif entre le dispositif de mesure (10) et la zone cible (35) ;
dans lequel le système de mesure (1) est configuré pour mettre en œuvre le procédé selon l'une quelconque des revendications précédentes 1 à 11.

15. Système de mesure (1) selon la revendication précédente, dans lequel le système de mesure (1) comprend en outre un système de traitement (20) configuré pour déterminer, sur la base de l'ensemble de données mesurées, au moins une propriété de la zone cible (35).
